# EUROPEAN PATENT SPECIFICATION

(11) **EP 1 576 473 B1**
(45) Date of publication and mention of the grant of the patent: **22.12.2010**
(21) Application number: 03767366.2
(22) Date of filing: 24.12.2003
(51) Int. Cl.: G06F 9/45, G06F 9/46, G06F 9/445, H04L 29/06, G06F 17/30

(54) **SYSTEM AND METHOD OF BUILDING WIRELESS COMPONENT APPLICATIONS**
SYSTEM UND VERFAHREN ZUR ERSTELLUNG VON DRAHTLOSEN KOMPONENTENANWENDUNGEN
SYSTEME ET PROCEDE DE CONSTRUCTION D'APPLICATIONS A COMPOSANTES POUR DISPOSITIFS SANS FIL

(30) Priority: 26.12.2002 US 436011 P; 17.09.2003 US 503706 P
(43) Date of publication of application: 21.09.2005
(73) Proprietor: RESEARCH IN MOTION LIMITED, Waterloo, Ontario N2L 3W8 (CA)
(72) Inventor: SHENFIELD, Michael, Richmond Hill, Ontario L4C 3S9 (CA); BIBR, Viera, Kilbride, Ontario L0P 1G0 (CA); FRITSCH, Brindusa, L., Toronto, Ontario M9C 2J9 (CA); GORING, Bryan, R., Milton, Ontario L9T 5V4 (CA); KLINE, Robert, Richmond Hill, Ontario L4B 2V9 (CA); VITANOV, Kamen B., Mississauga, Ontario L5M 6E8 (CA)
(74) Representative: Patel, Binesh
(86) International application number: PCT/CA2003/001980
(87) International publication number: WO 2004/059957

(56) References cited:
- WO-A-00/36803
- WO-A-01/86439
- WO-A-02/102093
- CRAMER T ET AL: "COMPILING JAVA JUST IN TIME" IEEE MICRO, IEEE INC. NEW YORK, US, vol. 17, no. 3, 1 May 1997 (1997-05-01), pages 36-43, XP000656035 ISSN: 0272-1732

## Description

### BACKGROUND

This application relates generally to wireless communication and specifically to software for mobile communication devices.

There is a continually increasing number of mobile communication devices in use today, such as mobile telephones, PDAs with wireless communication capabilities, and two-way pagers. Software applications which run on these mobile communication devices increase their utility. For example, a mobile phone may include an application which retrieves the weather for a range of cities, or a PDA may include an application that allows a user to shop for groceries. These software applications take advantage of the mobility of these devices and connectivity to a wireless network in order to provide timely and useful services to users, regardless of where the users are. However, due to the restricted resources of mobile communications devices, and the complexity of delivering data wirelessly to a mobile communication device, developing software applications for mobile communications devices remains a difficult and time-consuming task.

Currently, mobile communication devices are configured to communicate with Web Services through Internet based Browsers and/or native applications. Browsers have the advantage of being adaptable to operate on a cross-platform basis for a variety of different devices, but have a disadvantage of requesting pages (screen definitions in HTML) from the Web Service, which hinders the persistence of data contained in the screens. A further disadvantage of Browsers is that the screens are rendered at runtime, which can be resource intensive. Native applications have the advantage of being developed specifically for the type of mobile device, thereby providing a relatively optimized application program for each runtime environment. However, native applications have disadvantages of not being platform independent, thereby necessitating the development of multiple versions of the same application, as well as being relatively large in size, thereby taxing the memory resources of the mobile device. Further, application developers need experience with programming languages such as Java and C++ to construct these hard coded native applications. There is a need for application programs that can be run on web service clients having a wide variety of runtime environments, as well as having a reduced consumption of mobile device resources.

WO01/86439 describes a set of event messages that may be generated by a service in a distributed computing environment and which may be described in a data representation language event message schema for the service.

Systems and methods disclosed herein provide a component based application environment to obviate or mitigate at least some of the above presented disadvantages.

Current application programs are not adaptable to be run on clients having a wide variety of runtime environments, and can undesirably consume too much of mobile device resources. Browsers are an application program that have a disadvantage of requesting pages (screen definitions in HTML) from a Web Service, which hinders the persistence of data contained in the screens. A further disadvantage of Browsers is that the screens are rendered at runtime, which can be resource intensive. Native applications are a further example of current application programs which have disadvantages of not being platform independent, thereby necessitating the development multiple versions of the same application, as well as being relatively large in size, thereby taxing the memory resources of the mobile device. Contrary to current application programs, a system of building and communicating with wireless component applications is provided. The system comprises component applications which execute on mobile communication devices, which communicate with a web service via a wireless network and the Internet. The component applications comprise one or more data components, presentation components, and/or message components, which are written in a structured definition language such as XML code. The component applications can further comprise workflow components which contain a series of instructions such as written in a subset of ECMAScript, and can be embedded in the XML code in some implementations. A method of building wireless component applications is also provided. The method comprises steps of creating data components, creating presentation components, and creating message components. The data, presentation, and message components can be written in XML in some implementations. The method further comprises tying together the data, presentation, and message components with workflow components written as a set of instruction in a programming language such as subset of ECMAScript.

Accordingly, a method of interacting with a web service by a mobile communication device over a network is provided. The method comprises the steps of: sending a request network message for establishing communication between the web service and the communication device; receiving in response to the request network message a component application program including a plurality of components, a first set of the components having metadata descriptors expressed in a structured definition language for defining configuration information of the component application program and a second set of the components being expressed as a series of scripted instruction coupled to the metadata descriptors for defining a workflow of the component application program, the components being configured for provisioning by a runtime environment of the communication device to produce an executable version of the component application program configuring the device as a client of the web service; wherein execution of the executable version facilitates a subsequent exchange of data over the network between the web service and the communication device.

Also disclosed is a mobile communication device configured for interacting over a network with a web service using an executable version of a component application program including a plurality of components. The device comprises: a device infrastructure for operating the mobile device including a processor and an associated memory for executing the executable version; a user interface coupled to the device infrastructure having an input device and an output device configured for communication with the executable version; a wireless transceiver coupled to the device infrastructure and configured for communicating with the network; and a runtime environment for processing the component application program to generate the executable version for configuring the device as a client of the web service, the runtime environment configured for processing with a first set of the components having metadata descriptors expressed in a structured definition language for defining configuration information of the component application program and a second set of the components being expressed as a series of scripted instructions coupled to the metadata descriptors for defining a workflow of the component application program; wherein the execution of the executable version facilitates a subsequent exchange of data over the network between the web service and the communication device.

A computer program product for configuring a mobile communication device for interacting over a network with a web service using an executable version of a component application including a plurality of components is further disclosed. The computer program product comprises: a computer readable medium embodying program code means executable by a processor of the mobile communication device for implementing the method of the invention.

Also disclosed herein is a server configured for providing a web service for interacting with a mobile communication device over a network. The server comprises: a network interface for receiving a request network message to establish communication between the web service and the communication device; and a component application program coupled to the network interface for sending in response to the request network message a component application program including a plurality of components, a first set of the components having metadata descriptors expressed in a structured definition language for defining configuration information of the component application program and a second set of the components being expressed as a series of scripted instructions coupled to the metadata descriptors for defining a workflow of the component application program, the components being configured for provisioning by a runtime environment of the communication device to produce an executable version of the component application program configuring the device as a client of the web service; wherein the execution of the executable version facilitates a subsequent exchange of data over the network between the service and the device.

There is also provided a mobile communication device configured for interacting over a network with a web service using an executable version of at component application program including a plurality of components. The device comprises; an infrastructure means for operating the mobile device to execute the executable version; a user interface means coupled to the infrastructure means configured for communication with the executable version; a transceiver means coupled to the device infrastructure and configured for communicating with the network; and a runtime means for coordinating execution of the executable version for configuring the device as a web client of the web service, the runtime means configured for interaction with a first set of the components having descriptors expressed in a structured definition language and a second set of the components being expressed as a series of instructions; wherein the execution of the executable version provides for a subsequent exchange of information over the network between the web service and the communication device over the network.

### BRIEF DESCRIPTION OF THE DRAWINGS

These and other features will become more apparent in the following detailed description in which reference is made to the appended drawings wherein:
Figure 1 is a block diagram of a communication system;
Figure 2 is a block diagram of a mobile communication device of Figure 1;
Figure 3 is a block diagram of a component application program of Figure 2;
Figure 4 is a block diagram illustrating an example component application of Figure 3;
Figure 5 is a flowchart illustrating a method of building the wireless component application of Figure 3;
Figure 6 is a flowchart of a method for communicating between a device and web service of Figure 1;
Figure 7 shows an example method of implementing the component application program of Figure 3;
Figure 8 shows a further example method of implementing the component application program of Figure 3; and
Figure 9 is a block diagram of a further example of the device of Figure 2.

### DESCRIPTION

### Network System

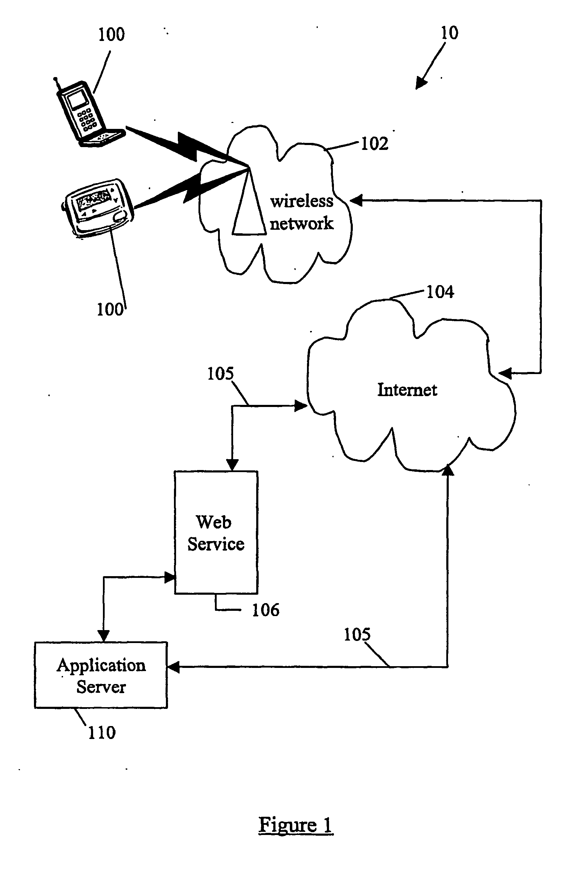

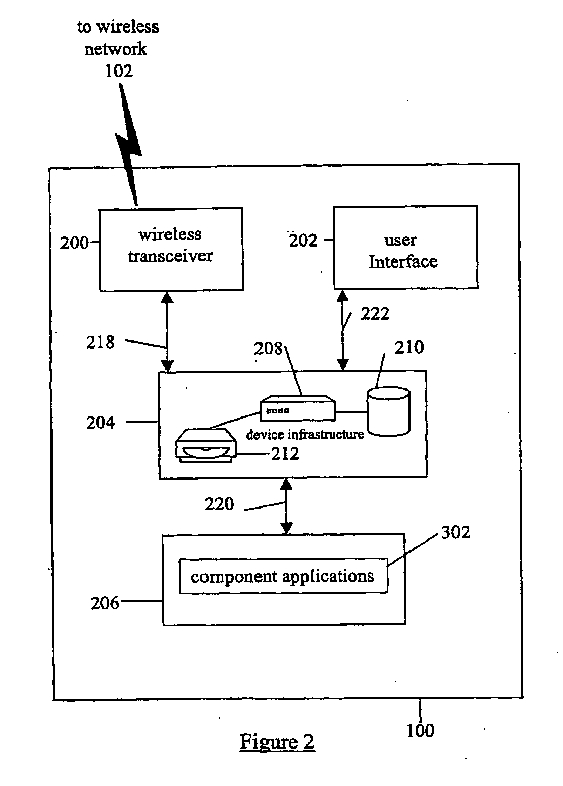

Referring to Figure 1, a network system 10 comprises mobile communication devices 100 for interacting with one or more web services provided by a web server 106 via a coupled wireless network 102 and the Internet 104. The devices 100 transmit and receive requests/response messages 105, respectively, when in communication with the web services of the web server 106. The devices 100 can operate as web clients of the web services by using the requests/response messages 105 in the form of message header information and associated data content, for example requesting and receiving product pricing and availability from an on-line merchant. The web service is an example of a system with which client application programs 302 (see Figure 2) on the communication devices 100 interact via the wireless network 102 and the Internet 104 in order to provide utility to users of the communication devices 100. The messages 105 sent between the communication devices 100 and the web service could traverse a message-map service (not shown) which converts the messages 105 between the differing formats used by the devices 100 and the web service.

For satisfying the appropriate requests/response messages 105, the web server 106 communicates with an application server 110 through various protocols (such as but not limited to HTTP and component API) for exposing relevant business logic (methods) to client application programs 302 (see Figure 2) once provisioned on the devices 100. The application server 110 can also contain the web server 106 software, such that the web server 106 can be considered a subset of the application server 110. The application programs 302 of the devices 100 can use the business logic of the application server 110 similarly to calling a method on an object (or a function). It is recognized that the client application program 302 can be downloaded/uploaded in relation to the application server 110, through the messages 105 via the network 102, 104, directly to the devices 100. It is further recognized that the devices 100 can communicate with one or more web servers 106 and associated application servers 110 via the networks 102, 104. It is also recognized that the devices 100 could be directly coupled to the application servers 110, thereby bypassing the web servers 106, if desired.

### Server Environment

Referring to Figure 1, the web server 106 provides information messages 105 which are used by the client application programs 302 on the communication devices 100. Alternatively, or in addition, the web server 106 may receive and use the information messages 105 provided by the client application programs 302 executed on the communication devices 100, or perform tasks on behalf of client application programs 302 executed on the communication devices 100.
The web service can be defined as a software service of the web server 106, which can implement an interface expressed using Web Services Description Language (WSDL) registered in Universal Discovery Description and Integration (UDDI), and can communicate through messages 105 with client devices 100 by being exposed over the Internet 104 through an appropriate protocol such as the Simple Object Access Protocol (SOAP). In some implementations, SOAP is a specification that defines the XML format for the messages 105, including a well-formed XML fragment enclosed in SOAP elements. Other parts of SOAP specify how to represent program data as XML and how to use SOAP to do Remote Procedure Calls (RPC). These optional parts of SOAP are used to implement RPC-style applications where a SOAP request message 105 containing a callable function, and the parameters to pass to the function, is sent from the client device 100, and the server 106 returns the response message 105 with the results of the executed function. SOAP also supports document style applications where the SOAP message 105 is a wrapper around an XML document. A further optional part of SOAP defines the HTTP binding (i.e. header), whereas some SOAP implementations support MSMQ, MQ Series, SMTP, or TCP/IP transport protocols. Alternatively, the web service may use other known communication protocols, message 105 formats, and the interface may be expressed in other web services languages than described above. Accordingly, the services supplied by the server 106 are utilized by the user of the devices 100 over the network 102, 104.

### Client Environment

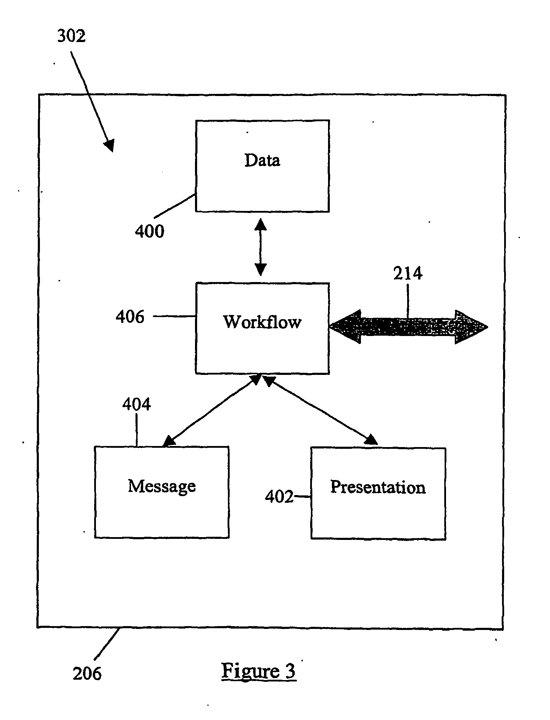

Referring to Figure 2, the component applications 302 are software applications which can be written, for example, in extensible Markup Language (XML) and a subset of ECMAScript, as described in Figure 3. XML and ECMAScript are standards-based languages which allow software developers to develop the component applications 302 in a portable and platform-independent way. The component applications 302 are transmitted over-the-air via the wireless network 102 and loaded into a memory module 210 of a device infrastructure 204.
Alternatively, the component applications 302 may be loaded via a serial connection, a USB connection, or a short-range wireless communication system such as IR, 802.11(x) and/or Bluetooth^{™} onto the device 100. Once loaded onto the mobile communication device 100, the component applications 302 are executed by a component framework 206 on the mobile communication device 100, which converts component applications 302 into native code which is executed by the processor in the device infrastructure 204. Alternatively, the component applications 302 may be executed as native code or interpreted by another software module or operating system on the mobile communication device 100, which provides the component framework 206 as a native runtime environment, hereafter referred to generically by reference numeral 206.

Referring again to Figures 1 and 2, the client runtime environment 206 provided by the devices 100 can be configured to make the devices 100 operate as web clients of the web services (of the web server 106). The client runtime environment 206 of the devices 100 is preferably capable of generating, hosting and executing the client application programs 302 (which are in the form of component applications - see Figure 3) on the device 100. Further, specific functions of the client runtime environment 206 can include such as but not limited to support for language, coordinating memory allocation, networking, management of data during I/O operations, coordinating graphics on an output device of the devices 100 and providing access to core object oriented classes and supporting files/libraries. Examples of the runtime environments 206 implemented by the devices 100 can include such as but not limited to Common Language Runtime (CLR) by Microsoft and Java Runtime Environment (JRE) by Sun Microsystems.

The terminal runtime environment 206 of the devices 100 preferably supports the following basic functions for the resident executable versions of the client application programs 302, such as but not limited to:
provide a communications capability to send messages 105 to the Web Services of the web server 106 connected via the network 102, 104;
provide data input capabilities by the user on an input device of the devices 100 to supply data parts for Web Services' outgoing messages 105 (messages to the service) of the web server 106;
provide data presentation or output capabilities for Web Services' response messages 105 (incoming messages) or uncorrelated notifications of the web server 106 on the output device;
provide data storage services to maintain local client data in the memory module 210 (see Figure 2) of the device 100; and
provide an execution environment for a scripting language for coordinating operation of the application components 400, 402, 404, 406 (see Figure 3) of the client application programs 302.

Therefore, the native client terminal runtime environment 206 provides an interface for the client application programs 302 and to the device 100,116 functionality of the processor 208 and associated operating system of the device infrastructure 204. The runtime environment 206 preferably supplies a controlled, secure and stable environment on the device 100, in which the component application programs 302 execute. The runtime environment 206 provisions the definitions of the components 400, 402, 404, 406 to create the actual web client specific for each respective device infrastructure 204 of the communication devices 100.

### Communication Device

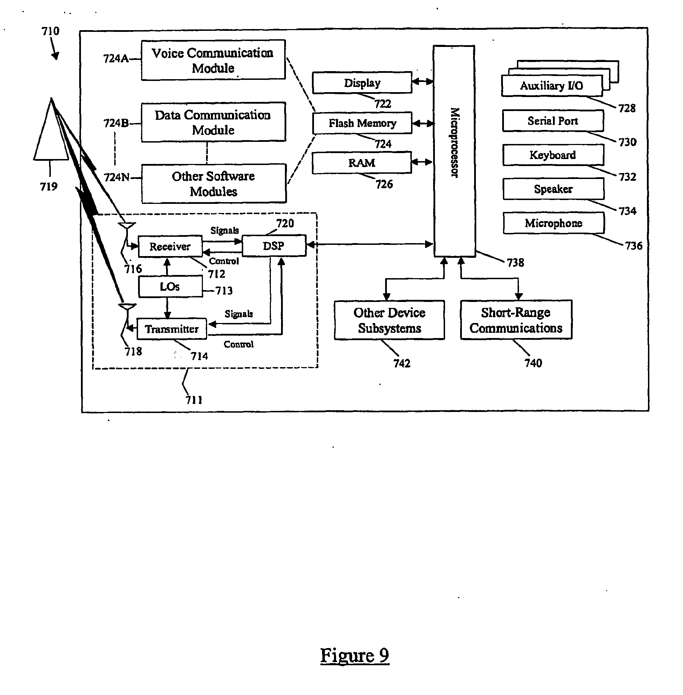

Referring to Figures 1 and 2, the communication devices 100 are devices such as but not limited to mobile telephones, PDAs, two-way pagers and dual-mode communication devices (see Figure 9). The devices 100 include a network connection interface such as a wireless transceiver 200 coupled via connection 218 to a device infrastructure 204. The wireless transceiver 200 is connectable during operation of the devices 100 to the network 102, 104, such as to the wireless network 102 by RF links, which enable the devices 100 to communicate with each other and with external systems (such as the web server 106) via the network 102, 104. The wireless transceiver 200 also helps the device 100 to coordinate the requests/response messages 105 between the client application programs 302 and the servers 106, 110. The network 102, 104 supports the transmission of data in the requests/response messages 105 between devices 100 and external systems, which are connected to the network 102, 104. The network 102, 104 may also support voice communication for telephone calls between the communication devices 100 and devices which are external to the network 102, 104. A wireless data transmission protocol can be used by the wireless network 102, such as but not limited to DataTAC, GPRS or CDMA. The connection between the wireless network 102 and the Internet 104 includes an Internet Gateway (not shown), which enables the messages 105 and associated data content to flow between the connected devices 100 and the web service of the server 106.

Referring again to Figure 2, the devices 100 also have a user interface 202, coupled to the device infrastructure 204 by connection 222, to interact with a user (not shown). The user interface 202 includes one or more user input devices such as but not limited to a QWERTY keyboard, a keypad, a trackwheel, a stylus, a mouse, a microphone, and the user output device such as an LCD screen display and/or a speaker. If the screen is touch sensitive, then the display can also be used as the user input device as controlled by the device infrastructure 204. The user interface 202 is employed by the user of the device 100 to coordinate the requests/response message messages 105 over the system 10 (see Figure 1) as employed by client application programs 302 executed in the runtime environment 206.

Referring again to Figure 2, operation of the communication device 100 is enabled by the device infrastructure 204. The device infrastructure 204 includes a computer processor 208 and the associated memory module 210. The computer processor 208 manipulates the operation of the network interface 200, the user interface 202 and the runtime environment 206 of the communication device 100 by executing related instructions, which are provided by an operating system and client application programs 302 located in the memory module 210. Further, it is recognized that the device infrastructure 204 can include a computer readable storage medium 212 coupled to the processor 208 for providing instructions to the processor and/or to load/update client application programs 302 in the memory module 210. The computer readable medium 212 can include hardware and/or software such as, by way of example only, magnetic disks, magnetic tape, optically readable medium such as CD/DVD ROMS, and memory cards. In each case, the computer readable medium 212 may take the form of a small disk, floppy diskette, cassette, hard disk drive, solid state memory card, or RAM provided in the memory module 210. It should be noted that the above listed example computer readable mediums 212 can be used either alone or in combination.

### Component Application Program

Referring to Figure 3, a block diagram of the component application program 302 comprises the data components 400, the presentation components 402 and the message components 404, which are coordinated by workflow components 406 through communications 214 with the client runtime environment 206. The structured definition language can be used to construct the components 400, 402, 404 as a series of metadata records, which consist of a number of pre-defined elements representing specific attributes of a resource such that each element can have one or more values. Each metadata schema typically has defined characteristics such as but not limited to; a limited number of elements, a name of each element, and a meaning for each element. Example metadata schemas include such as but not limited to Dublin Core (DC), Anglo-American Cataloging Rules (AACR2), Government Information Locator Service (GILS), Encoded Archives Description (EAD), IMS Global Learning Consortium (IMS), and Australian Government Locator Service (AGLS). Encoding syntax allows the metadata of the components 400, 402, 404 to be processed by the device infrastructure 204 (see Figure 2), and encoding schemes include such as but not limited to XML, HTML, XHTML, XSML, RDF, Machine Readable Cataloging (MARC), and Multipurpose Internet Mail Extensions (MIME). The client runtime environment 206 operates on the metadata descriptors of the components 400, 402, 404 to provision an executable version of the application program 302.

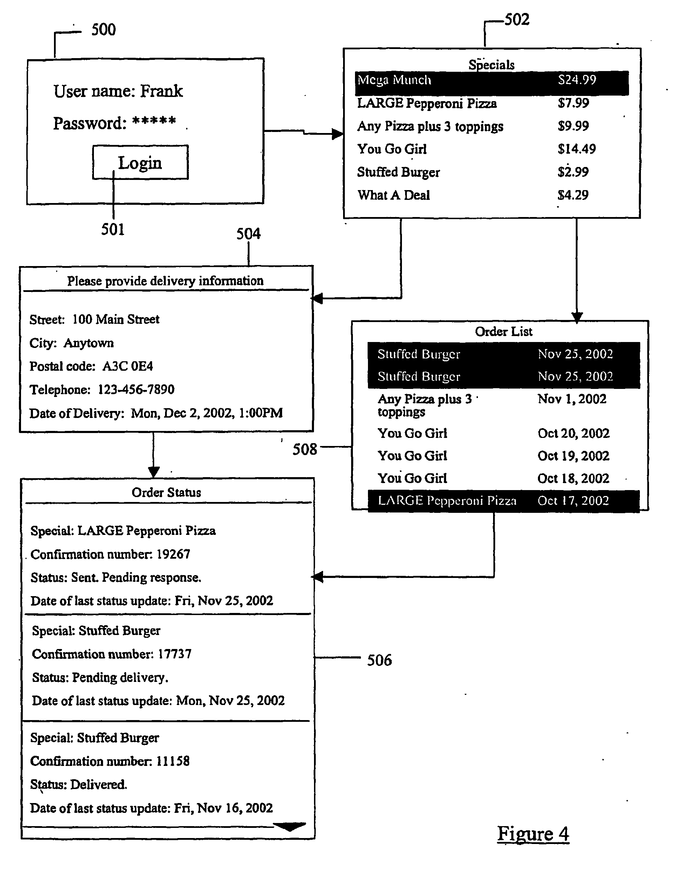

Referring again to Figure 4, the data components 400 define data entities which are used by the component application program 302. Examples of data entities which data components 400 may describe are orders, users, and financial transactions. Data components 400 define what information is required to describe the data entities, and in what format the information is expressed. For example, the data component 400 may define such as but not limited to an order which is comprised of a unique identifier for the order which is formatted as a number, a list of items which are formatted as strings, the time the order was created which has a date-time format, the status of the order which is formatted as a string, and a user who placed the order which is formatted according to the definition of another one of the data components 400.

Referring again to Figure 4, the message components 404 define the format of messages used by the component application program 302 to communicate with external systems such as the web service. For example, one of the message components 404 may describe such as but not limited to a message for placing an order which includes the unique identifier for the order, the status of the order, and notes associated with the order.

Referring again to Figure 4, the presentation components 402 define the appearance and behavior of the component application program 302 as it displayed by the user interface 202. The presentation components 402 can specify GUI screens and controls, and actions to be executed when the user interacts with the component application 302 using the user interface 202. For example, the presentation components 402 may define screens, labels, edit boxes, buttons and menus, and actions to be taken when the user types in an edit box or pushes a button. The majority of Web Service consumers use a visual presentation of Web Service operation results, and therefore provide the runtime environment on their devices 100 capable of displaying user interface screens.

Referring to Figures 1 and 4, it is recognized that in the above described client component application program 302 definitions hosting model, the presentation components 402 may vary depending on the client platform and environment of the device 100. For example, in some cases Web Service consumers do not require a visual presentation. The application definition of the components 400, 402, 404, 406 of the component application program 302 can be hosted in a Web Service registry as a bundle of platform-neutral data 400, message 404, workflow 406 component descriptors with a set of platform-specific presentation component 402 descriptors for various predefined client runtimes 206 (see Figure 2). When the discovery or deployment request message 105 is issued the client type should be specified as a part of this request message 105. In order not to duplicate data, message, and workflow metadata while packaging component application programs 302 for different client platforms of the communication devices 100, application definitions can be hosted on the application server 110 (for example) as a bundle of platform-neutral component definitions linked with different sets of presentation components 402. When a user makes a discovery or download request message 105, the client runtime type of the communication devices 100,116 is validated and the proper bundle is constructed for delivery by the web server 106 to the device 100 over the network 102, 104. For those Web Service consumers, the client application programs 302 would contain presentation components 402 linked with the data 400 and message 404 components through the workflow components 406.

Referring again to Figure 4, the workflow components 406 of the component application program 302 define processing that occurs when an action is to be performed, such as an action specified by a presentation component 402 as described above, or an action to be performed when messages 105 (see Figure 1) arrive from the system 10. Presentation, workflow and message processing are defined by the workflow components 406. The workflow components 406 are written as a series of instructions in a programming language or a scripting language, such as but not limited to ECMAScript, and can be compiled into native code and executed by the runtime environment 206, as described above. An example of the workflow components 406 may be to assign values to data, manipulate screens, or send the message 105. As with presentation components, multiple workflow definitions can be created to support capabilities and features that vary among devices 100. The appropriate workflow definition can be determined and sent at the time of downloading and provisioning of the application program 302.

ECMA (European Computer Manufacturers Association) Script is a standard script language, wherein scripts can be referred to as a sequence of instructions that is interpreted or carried out by another program rather than by the computer processor. Some other example of script languages are Per1, Rexx, VBScript, JavaScript, and Tcl/Tk. The scripting languages, in general, are instructional languages that are used to manipulate, customize, and automate the facilities of an existing system, such as the devices 100. In such systems, useful functionality is already available through the user interface 202 (see Figure 2), and the scripting language is a mechanism for exposing that functionality to program control. In this way, the device 100 is said to provide a host runtime environment of objects and facilities which completes the capabilities of the scripting language.

Specifically, EMCAScript is an object-oriented programming language for performing computations and manipulating computational objects within the host runtime environment. ECMAScript can be used as a Web scripting language, providing a mechanism to perform server 106,110 computation as part of the Web-based client-server architecture of the system 10 (see Figure 1). ECMAScript provides core scripting capabilities for a variety of host runtime environments, and therefore the core scripting language can be considered platform neutral for a number of particular host runtime environments. The runtime environment 206 (see Figure 2) can provide the ECMAScript host runtime environment for client-side computation of the communication devices 100, such as but not limited to; objects that represent windows, menus, pop-ups, dialog boxes, text areas, anchors, frames, history, cookies, and input/output. Further, the host runtime environment of the runtime environment 206 provides a means to attach scripting code to events such as but not limited to change of focus, page and image loading, unloading, error, and abort, selection, form submission, and mouse actions. In implementations using ECMA scripting, the code appears within the workflow components 406, combines user interface elements and fixed and computed text and images, and is reactive to user interaction on the user interface 202. The web server 106 (see Figure 1) provides a different host environment for server-side computation including objects representing requests, clients, and files, and mechanisms to lock and share data. By using the client side and server side scripting together, it is possible to distribute computation between the client communication devices 100 and the servers 106,110 while providing a customized user interface 202 for the Web-based component application programs 302.

ECMAScript also defines a set of built-in operators which may not be, strictly speaking, functions or methods. ECMAScript operators include such as but not limited to various unary operations, multiplicative operators, additive operators, bitwise shift operators, relational operators, equality operators, binary bitwise operators, binary logical operators, assignment operators, and the comma operator. ECMAScript syntax resembles Java syntax, however, ECMAScript syntax is relaxed to enable it to serve as an easy-to-use scripting language for developers. For example, a variable in ECMAScript is not required to have its type declared nor are types associated with properties, and defined functions are not required to have their declarations appear textually before calls to them. It is recognized that in a class-based object-oriented programming language, in general, state is carried by instances, methods are carried by classes, and inheritance is only of structure and behavior. In ECMAScript, the state and methods are carried by objects, and structure, behavior, and state are all inherited.

### Component Application Program Example

Accordingly, referring to Figure 4, the client application programs 302 can be defined as a set of platform-neutral component definitions, namely for data 400 and message 404 components, and presentation components 402 using XML (or any other suitable structured definition language). The workflow components 406 can be defined using ECMAScript (or any other suitable platform-neutral scripting language). The client runtime environment 206 (see Figure 2) can generate component templates based on meta-definitions when the components 400, 402, 404, 406 of the component application program 302 are provisioned on the communication device 100. With a large variety of terminal runtime environments 206, the cross-platform standards such as XML or ECMAScript can be used to define application component metadata instead of pre-building the component application programs 302. This delayed binding can allow generic application definitions of the component application programs 302 to be run on a wide variety of terminal system environments 206, represented by various different communication devices 100.

The following example shows how a Web Services client application program 302 could be expressed using a structured definition language, such as but not limited to XML, and a platform neutral scripting/programming language, such as but not limited to ECMAScript, with defined components conforming with the following Document Type Definition (DTD):

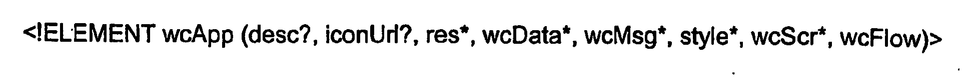

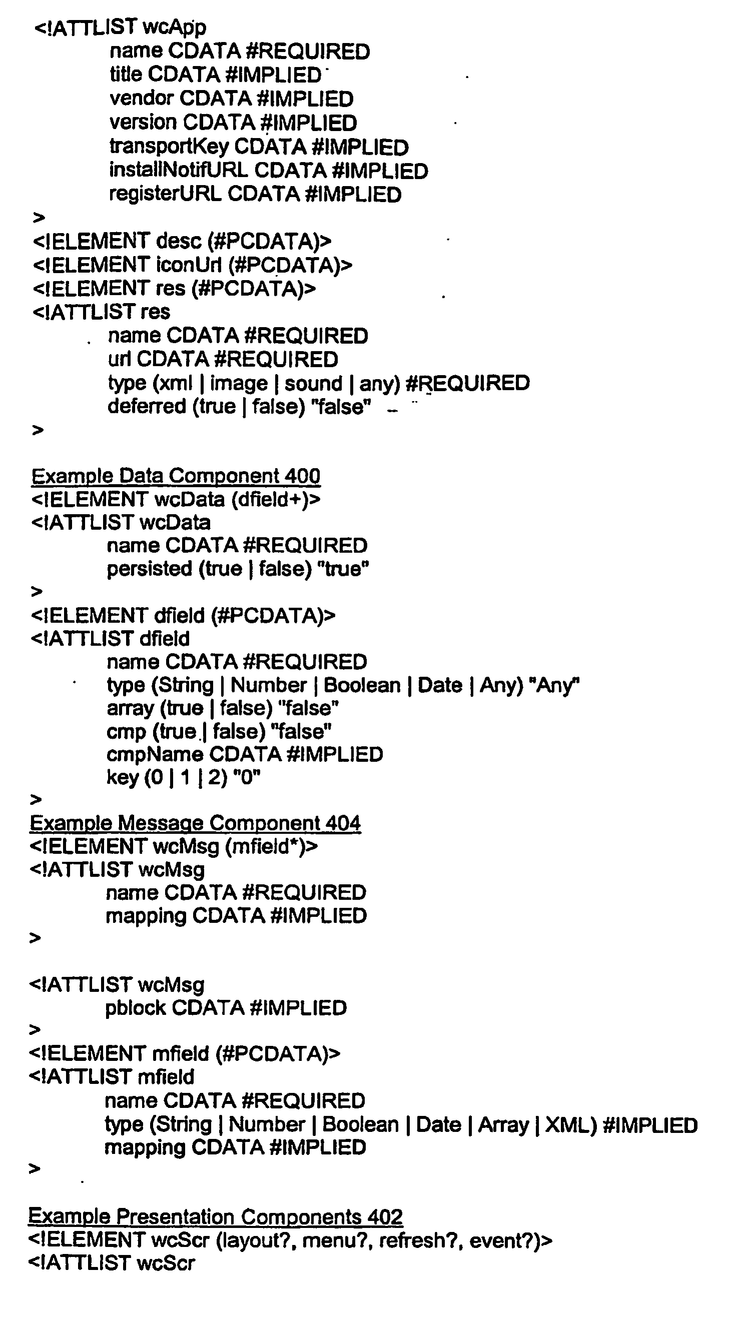

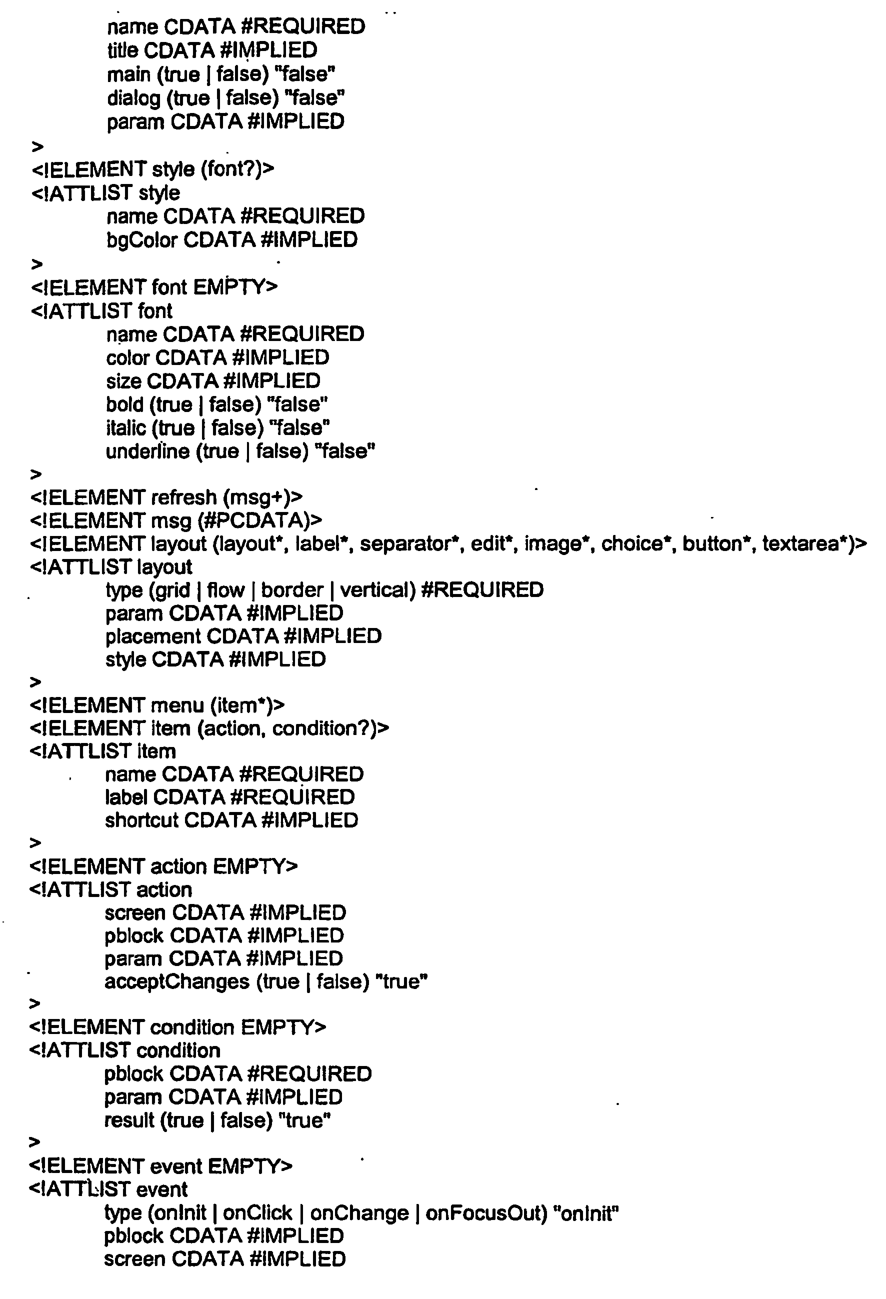

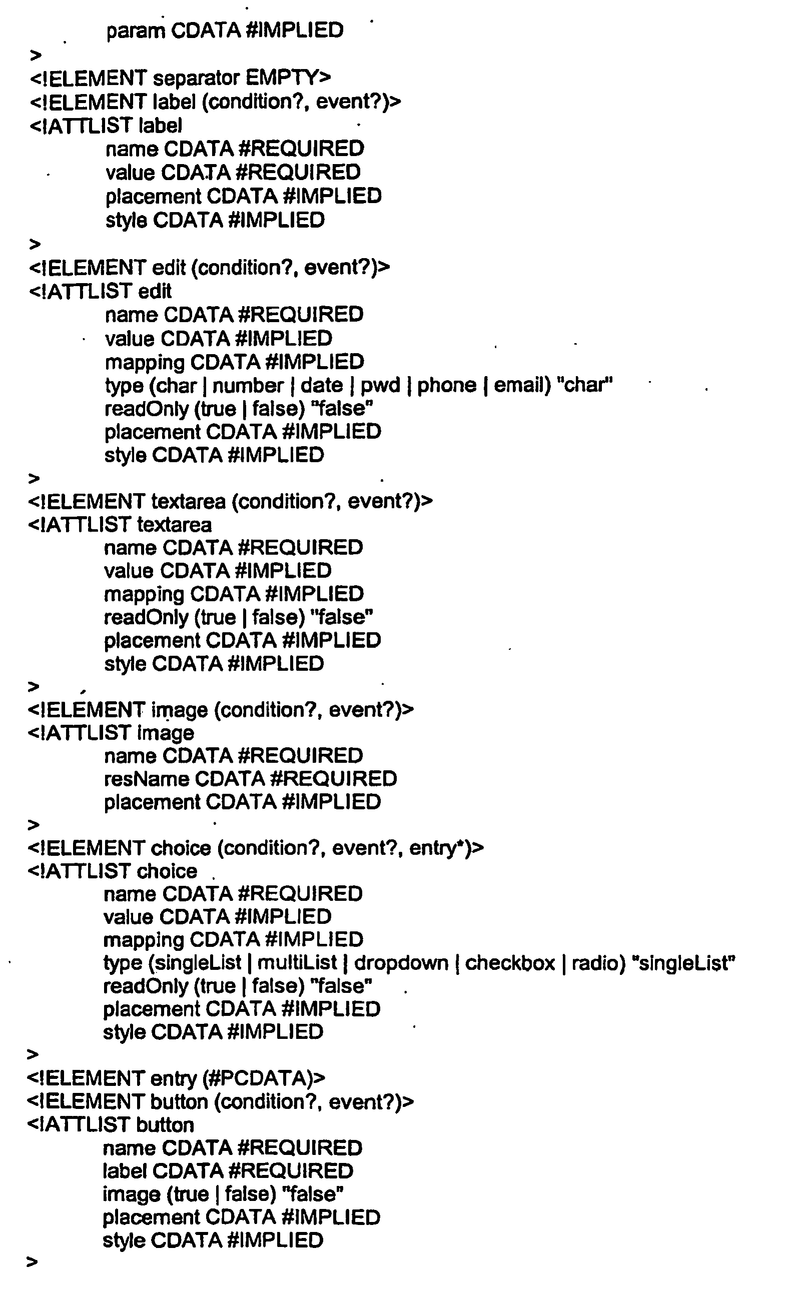

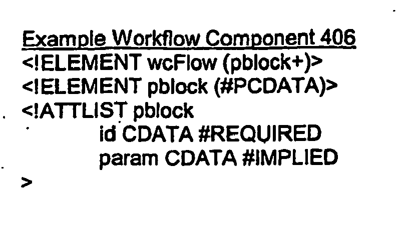

As given above, the XML elements define the example component application 302 including a wcApp element, a wcData element, a wcMsg element, a wcSrc element, and a wcFlow element. Referring to Figure 3, the wcApp element is a top-level element which defines the component application program 302. The wcData element defines the example data component 400, which is comprised of a group of named, typed fields. The wcMsg element defines the example message component 404, which similarly defines a group of named, typed fields. The wcSrc element defines the example presentation component 402. The example presentation component 402 is a label, a separator, an image, a button, an edit field, a text area, a single-selection list, a multi-selection list, a drop-list, a checkbox, a radio button, or a screen containing a group of other presentation components 402.

Referring to the above example component application program 302 and Figure 3, the wcFlow element defines the example workflow components 406. The pblock attributes of the XML elements specify a pblock element nested in the wcFlow element. Each pblock element comprises script which defines part of the workflow of the component application program 302. The script is written in ECMAScript.

In order to define the behavior of the component application 302, the workflow components 406 use ECMAScript to reference and manipulate the data components 400, the presentation components 402, and the message components 404. Workflow components 406 can also reference external object types, which allow actions to be performed on the components defined in the component application 302. For example, a wcMsg type allows a message defined by a message component 404 to be evaluated to determine whether mandatory fields have been supplied, and to be sent to an external system such as the web service of the server 106. A wcData type allows the size of collections of data entities defined by data components 400 to be determined, and allows data entities to be deleted. A wcScr type allows a presentation component 402 to be displayed to the user. Similarly, a special dialog external object allows a message to be displayed to the user on the user interface 202 (see Figure 2).

### Example Component Application Program 302 with Interface

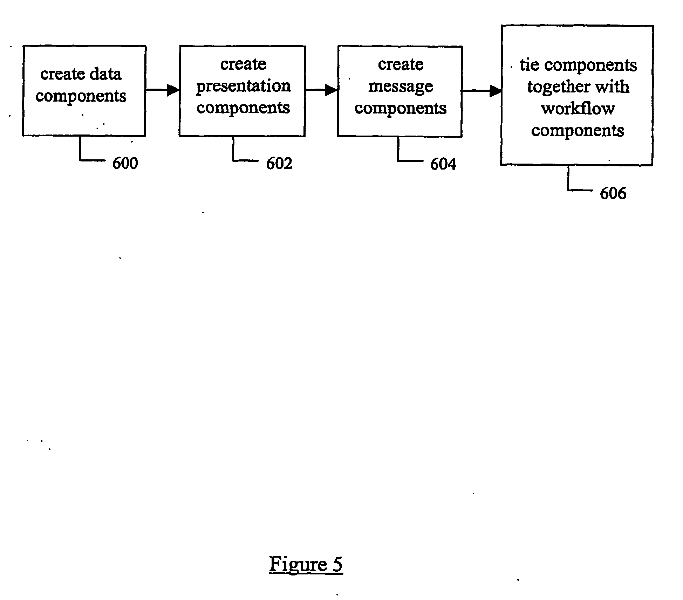

Referring to Figures 1 and 5, a block diagram illustrating a further example component application program 302 is shown. The presentation components 402 included in the example component application 302 define a login screen 500, a specials screen 502, a delivery information screen 504, an order list screen 508, and an order status screen 506. These screens would be presented on the user interface 202 (see Figure 2) of the communication devices 100. The example component application 302 allows a user to view a pizza menu, to order a pizza for delivery, and to view details of past orders. The user is first presented with the login screen 500 on the user interface 202. The user provides a user name and password, and then pushes a login button 501. The workflow component 406 checks the user name and password against a user profile which is provided by the web service of the server 106 through messages 105. If the user is successfully logged in, then the specials screen 502 is displayed. From the specials screen 502, the user can select menu items to place an order or to view the status of orders, which determines whether the delivery information screen 504 is displayed, or if the order list screen 508 is displayed. The delivery information screen 504 allows the user to specify details of an order. The information provided by the user is stored using the data component 400 which describes an order.

The user then selects a menu item to send the order, which triggers the workflow component 406 to send the message 105 defined by the corresponding message component 404 containing order information to the web service on the server 106. The order list screen 508 lists past orders, and allows a user to select a menu item to view details of one or more of the listed orders. After sending an order or selecting the menu item to view order details, the order status screen 506 is displayed, based on response messages 105 received by the device 100 and subsequently processed by the relevant message 404, workflow 406, presentation 402, and data 400 components. The order status screen 506 contains information describing orders that the user has placed, and a menu item which, when selected, causes the specials screen 502 to be displayed. The message components 404 relay the required data for the input and output of the messages 105. The corresponding data components 400 coordinate the storage of the data in the memory module 210 (see Figure 2) of the device 100 for subsequent presentation on the user interface by the presentation components 402. The workflow components 406 coordinate the transfer of data between the data 400, presentation 402, and message 404 components.

The example component application program 302 displayed in Figure 5 is represented in XML and mEScript as follows, including data components 400 as "wcData", message components 404 as "wcMsg", presentation components 402 as "wcScr" and workflow components 406 as "wcFlow" for processing the other components 400, 402, 404:

```
<!DOCTYPE wcApp SYSTEM "wcApp.dtd">
 <wcApp name="WirelessPizza" title="Wireless Plaza" vendor="ARG" verslon="0.9">
 <desc> Order pizza from your wireless device. </desc>
 <iconUrl>http://www.example.com/wirelessPizzalcon.png</iconUrl>
 <wcData name="User">
      <dfield name="name" type="String" key="1"/>
      <dfield name="passwordHash" type="String"/>
      <dfield name="street" type="String"/>
      <dfield name="city" type="String"/>
      <dfield name="postal" type="String"/>
      <dfield name="phone" type="String"/>
 </wcData>
 <wcData name="OrderStatus">
      <dfield name="confNumber" type="Number" key="1"/>
      <dfield name="status" type="String">
      <dfield name="datetime" type="Date"/>
 </wcData>
 <wcData name="Order">
      <dfield name="orderld" type="Number" key="1"/>
      <dfield name="special" type="String"/>
      <dfield name="user" cmp="true" cmpName="User"/>
      <dfield name="datetime" type="Date"/>
      <dfield name="orderStatus" cmp="true" cmpName="OrderStatus"/>
 </wcData>
 <wcData name="Special">
      <dfield name="desc" key="1" type="String"/>
      <dfield name="price" type="Number"/>
 </wcData>
 <wcMsg name="inAddSpecial" mapping="Special">
 </wcMsg>
 <wcMsg name="inRemovespecial" pblock="mhRemoveSpecial">
      <mfield name="desc" mapping="Special.desc"/>
 </wcMsg>
 <wcMsg name="inOrderStatus">
      <mfield name="orderld" mapping="Order.orderld"/>
      <mfield name="status" mapping="Order.orderStatus"/>
 </wcMsg>
 <wcMsg name="inUserInfo" mapping="User">
 </wcMsg>
 <wcMsg name="outOrder">
      <mfield name="special" mapping="Order.special">
      <mfield name="user" mapping="Order.user"/>
      <mfield name="datetime" mapping="Order.datetime"/>
 </wcMsg>
 <wcScr name="serSpecials" title="Specials" main="true">
       <layout type="flow">
              <choice name="slSpecials" value="Special[].desc + '- $' + Special[].price"
 type="singleList"/>
       </layout>
      <menu>
              <item name="login" label="Login">
                      <action screen="scrLogin"/>
                      <condition pblock="chLoggedin" result="false"/>
              </item>
             <item name="order" label="Order">
                      <action screen="scrDelivery" param="Application.authenticatedUser"/>
                     <condition pblock="chLoggedin"/>
              </item>
              <item name="viewOrderStatus" label="View Orders Status">
                     <action screen="scrOrdersList"/>
                     <condition pblock="chLoggedin"/>
              </item>
      </menu>
 </wcScr>
 <wcScr name="scrLogin" dialog="true">
      <layout type="vertical">
              <layout type="flow">
                     <label name="lblUserName" value="User Name:"/>
                     <edit name="edUserName" type="char"/>
              </layout>
              <layout type="flow">
                     <label name="lblPassword" value="Password:"/>
                     <edit name="edPassword" type="pwd"/>
              </layout>
              <button name="btnLogin" label="Login">
                     <event type="onClick" pblock="ahLogin" param="edUserName.value"/>
              </button>
      </layout>
 </wcScr>
 <wcScr name="scrDelivery title="Please provide delivery information" param="User">
      <layout type="vertical">
              <layout type="flow">
                     <label name="lblStreet" value="Street:"/>
                     <edit name="street" mapping="User.street" type="char"/>
              </layout>
              <layout type="flow">
                     <label name="lblCity" value="City:"/>
                     <edit name="city" mapping="User.city" type="char"/>
              </layout>
              <layout type="flow">
                     <label name="lblPostalCode" value="Postal code:"/>
                     <edit name="postalCode" mapping="User.postal" type="char"/>
              </layout>
              <layout type="flow">
                     <label name="lblPhone" value="Telephone:"/>
                     <edit name="phone" mapping="User.phone" type="phone"/>
              </layout>
              <layout type="flow">
                      <label name-"lblDate" value="Date of delivery:"/>
                      <edit name="date" type="date"/>
              </layout>
      </layout>
      <menu>
              <item name="sendOrder" label="Send Order">
                      <action pblock="ahSendOrder" param="User"/>
              </item>
      </menu>
 </wcScr>
 <wcScr name="scrOrderStatus" title="Order status" param="Order[]">
      <layout type="vertical" param="%">
              <layout type="flow">
                     <label name="lblSpecialr" value="Special:"/>
                     <label name="lblSpecialMapped" value="@Order[].special"/>
              </layout>
              <layout type="flow">
                     <label name="lblConfNumber" value="Confirmation number:"/>
                     <label name="lblConfNumberMapped"
 value="@Order[].orderStatus.confNumber"/>
              </layout>
              <layout type="flow">
                     <label name="lblStatus" value="Status:"/>
                     <label name="lblStatusMapped" value="@Order[].orderStatus.status"/>
              </layout>
              <layout type="flow">
                     <label name="lblConfDate" value="Date of last status update:"/>
                     <label name="lblConfDateMapped"
 value="@Order[].orderStatus.datetime"/>
              </layout>
              <separator/>
      </layout>
      <menu>
              <item name="continue" label="Continue">
                     <action screen="scrSpecials"/>
              </item>
      </menu>
      <refresh>
              <msg> inOrderStatus </msg>
      </refresh>
 </wcScr>
 <wcScr name="scrOrdersList" title="Previous Orders">
      <layout type="vertical">
              <label name="lblInstructions" value="Select one or more order:"/>
              <choice name="mlOrderList" value="@Order[].datetime +' -' + @Order[].special"
 mapping="Order[]" type="multiList"/>
      </layout>
      <menu>
              <item name="viewOrder" label="View Order">
                     <action screen="scrOrderStatus" param="mlOrderList.selected"/>
              </item>
      </menu>
 </wcScr>
 <wcFlow>
       <pblock id="chLoggedin">
              return Application.authenticatedUser != null;
       </pblock>
       <pblock id="ahLogin" param="User.name">
               if(User.passwordHash = Util.md5(scrLogin.edPassword)) {
                      Application.authenticatedUser = User;
              } scrLogin.back();
              } else {
              Dialog.display("Invalid login!");
              }
       </pblock>
       <pblock id="ahSendOrder" param="User">
              Order.orderld = Util.guid();
              Order.special = scrSpecials.slSpeclais-selected;
              Order.user = User:
              Order.datetime = scrDelivery.date;
              OrderStatus.confNumber = Util.guid();
              OrderStatus.status = "Sent Pending response.";
              OrderStatus.date = Util.currentDate();
              Order.orderStatus = OrderStatus;
              outOrder.send();
              scrOrderStatus.display(Order);
      </pblock>
      <pblock id="mhRemoveSpecial" param="inRemoveSpeciai">
              Special.desc = inRemoveSpecial.desc;
              Special.delete();
      <block>
  </wcFlow>
 </wcApp>
```

Figure 5 is a flowchart illustrating a method of building the wireless component application 302 for subsequent communication over the network 102, 104 to the device 100. Referring as well to Figure 3, the method begins with step 600 of creating the data components 400 for defining data entities such as users and orders. The method continues with step 602 of creating presentation components 402 for defining user-interface elements such as screens, buttons, menus and images. The method continues with step 604 of creating message components 402 for defining messages formats which are sent to external systems such as web services on the server 106 (see Figure 1). The components 400, 402, 404 are expressed in the structured definition language such as but not limited to one based on XML. The method concludes with step 606 of tying together the data 400, presentation 402 and message 404 components with workflow components 406 in order to define the behavior of the application 302. The workflow components 406 are written as a series of instructions, such as but not limited to ECMAScript, which is described above. The method of building a wireless component application 302 may include fewer or more steps that those shown in Figure 5.

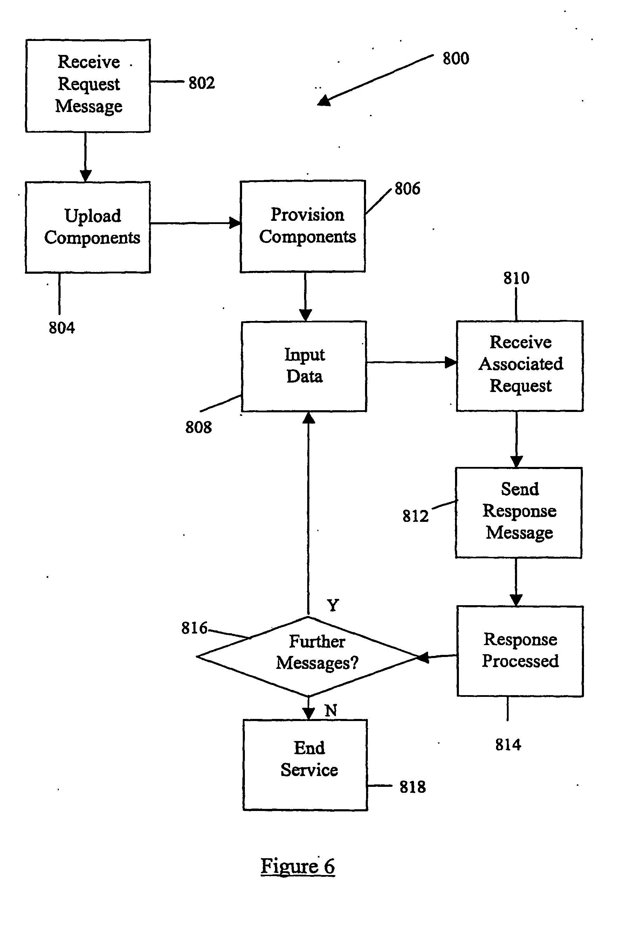

Referring to Figures 1 and 6, operation 800 of the interaction between the devices 100 and the web service of the web server 106 is shown. The web service receives 802 the request message 105 requesting that the device 100 begin communications with the web service. The web service uploads 804 the required components 400, 402, 404, 406 (if any) of the component application 302 to the device 100, in order to support subsequent information exchange between the web service and the device 100. The device receives the transmitted component application 302 and proceeds to provision 806 the components 400, 402, 404, 406 by the runtime environment 206 (see Figure 3), in order to configure the device as a web client of the web service, by producing an executable version of the component application 302. The user of the device 100 inputs 808 data into the user interface 202 (see Figure 2) of the device 100 for subsequent sending 810 to the web service as a request message 105 for receiving web service operations. The web service processes the request message 105 and sends 812 the appropriate response message 105 including data for subsequent output on the user interface 202. The device 100 receives 814 the message 105 containing the data and the executable version of the component application 302 outputs the data appropriately on the user interface 202. Further data exchange 816 is performed between the device 100 and the web service as per above, or the exchange is terminated 818 and the executable version of the component application 302 is either saved in the memory 210 (see Figure 2) or is deleted from the runtime environment 206 as desired.

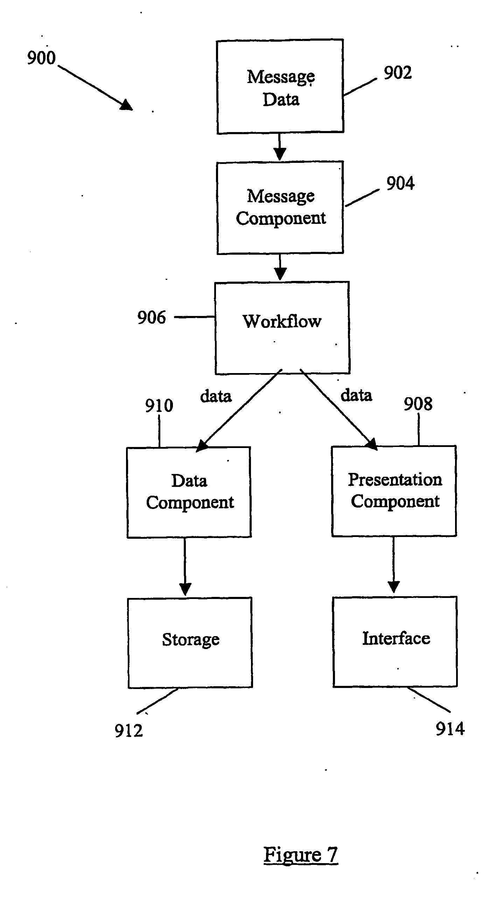

Referring to Figures 1, 3 and 7, for example, operation 900 shows when the device 100 receives 902 the response message 105 containing message data, the appropriate workflow component 406 interprets 904 the data content of the message 105 according to the appropriate message component 404. The workflow component 406 then processes 906 the data content and inserts 910 the data into the corresponding data component 400 for subsequent storage 912 in the memory module 210 (see Figure 2). Further, if needed, the workflow component 406 also inserts 908 the data into the appropriate presentation component 402 for subsequent display 914 on the user interface 202 (see Figure 2).

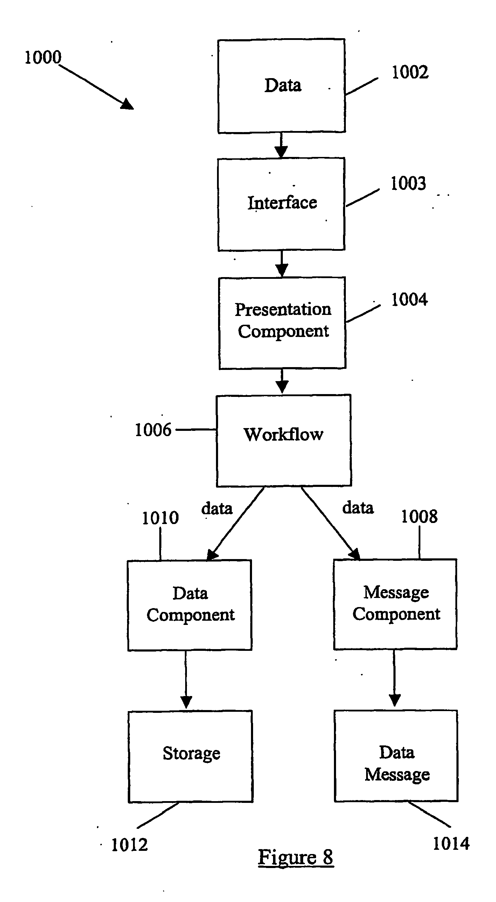

Referring to Figures 1, 3 and 8 operation 1000 shows data input 1002 for an action, such as pushing a button or selecting a menu item, which the user performed 1003 on a user-interface element through the user interface 202 (see Figure 2). The relevant workflow component 406 interprets 1004 the input data according to the appropriate presentation component 404 and creates 1006 data entities which are defined by the appropriate data components 400. The workflow component 406 then populates 1010 the data components 400 with the input data provided by the user for subsequent storage 1012 in the memory module 210 (see Figure 2). Further, the workflow component 406 also inserts 1008 the input data into the appropriate message component 404 for subsequent sending 1014 of the input data as data entities to the web service in the message 105, as defined by the message component 404.

It is recognized that component applications 302 which are created using the methods described above can require less time to create than hard coded applications, since the component applications 302 do not use full programming languages, but rather use standards-based technologies such as XML and ECMAScript, which are comparatively simple and easy to learn. The methods can result in component applications 302 in which the user-interface 202 and the definition of the data are decoupled. This decoupling allows for modification of any component 400, 402, 404, 406 in the component application 302 without affecting and requiring substantial changes to other components 400, 402, 404, 406 in the application 302, and thus can facilitate maintenance of the component applications 302, including modification and updating of the component applications 302 on the device 100.

Figure 9 is a block diagram of a dual-mode mobile communication device 710, which is a further example of the device 100 of Figures 1 and 6. The dual-mode mobile communication device 710 includes a transceiver 711, a microprocessor 738, a display 722, Flash memory 724, RAM memory 726, auxiliary input/output (I/O) devices 728, a serial port 730, a keyboard 732, a speaker 734, a microphone 736, a short-range wireless communications sub-system 740, and may also include other device sub-systems 742. The transceiver 711 preferably includes transmit and receive antennas 716, 718, a receiver 712, a transmitter 714, one or more local oscillators 713, and a digital signal processor 720. Within the Flash memory 724, the dual-mode mobile communication device 710 preferably includes a plurality of software modules 724A-724N that can be executed by the microprocessor 738 (and/or the DSP 720), including a voice communication module 724A, a data communication module 724B, and a plurality of other operational modules 724N for carrying out a plurality of other functions.

The dual-mode mobile communication device 710 is preferably a two-way communication device having voice and data communication capabilities. Thus, for example, the dual-mode mobile communication device 710 may communicate over a voice network, such as any of the analog or digital cellular networks, and may also communicate over a data network. The voice and data networks are depicted in Figure 9 by the communication tower 719. These voice and data networks may be separate communication networks using separate infrastructure, such as base stations, network controllers, etc., or they may be integrated into a single wireless network.

The communication subsystem 711 is used to communicate with the voice and data network 719, and includes the receiver 712, the transmitter 714, the one or more local oscillators 713 and may also include the DSP 720. The DSP 720 is used to send and receive signals to and from the transmitter 714 and receiver 712, and is also utilized to receive control information from the transmitter 714 and to provide control information to the receiver 712. If the voice and data communications occur at a single frequency, or closely-spaced set of frequencies, then a single local oscillator 713 may be used in conjunction with the transmitter 714 and receiver 712. Alternatively, if different frequencies are utilized for voice communications versus data communications, then a plurality of local oscillators 713 can be used to generate a plurality of frequencies corresponding to the voice and data networks 719. Although two antennas 716, 718 are depicted in Figure 9, the dual-mode mobile communication device 710 could be used with a single antenna structure. Information, which includes both voice and data information, is communicated to and from the communication module 711 via a link between the DSP 720 and the microprocessor 738. The detailed design of the communication subsystem 711, such as frequency band, component selection, power level, etc., is dependent upon the communication network 719 in which the dual-mode mobile communication device 710 is intended to operate. For example, a dual-mode mobile communication device 710 intended to operate in a North American market may include a communication subsystem 711 designed to operate with the Mobitex^{™} or DataTAC^{™} mobile data communication networks and also designed to operated with any of a variety of voice communication networks, such as AMPS, TDMA, CDMA, PCS, etc., whereas a device 710 intended for use in Europe may be configured to operate with the General Packet Radio Service (GPRS) data communication network and the GSM voice communication network. Other types of data and voice networks, both separate and integrated, may also be utilized with the dual-mode mobile communication device 710.

Depending upon the type of network or networks 719, the access requirements for the dual-mode mobile communication device 710 may also vary. For example, in the Mobitex and DataTAC data networks, mobile devices are registered on the network using a unique identification number associated with each device. In GPRS data networks, however, network access is associated with a subscriber or user of a mobile device. A GPRS device typically requires a subscriber identity module ("SIM"), which is required in order to operate a dual-mode mobile communication device on a GPRS network. Local or non-network communication functions (if any) may be operable, without the SIM, but a dual-mode mobile communication device will be unable to carry out any functions involving communications over the data network 719, other than any legally required operations, such as 911 emergency calling.

After any required network registration or activation procedures have been completed, the dual-mode mobile communication device 710 may then send and receive communication signals, including both voice and data signals, over the network 719 (or networks). Signals received by the antenna 716 from the communication network 719 are routed to the receiver 712, which provides for signal amplification, frequency down conversion, filtering, channel selection, etc., and may also provide analog to digital conversion. Analog to digital conversion of the received signal allows more complex communication functions, such as digital demodulation and decoding to be performed using the DSP 720. In a similar manner, signals to be transmitted to the network 719 are processed, including modulation and encoding, for example, by the DSP 720 and are then provided to the transmitter 714 for digital to analog conversion, frequency up conversion, filtering, amplification and transmission to the communication network 719 (or networks) via the antenna 718. Although a single transceiver 711 is shown in Figure 9 for both voice and data communications, it is possible that the dual-mode mobile communication device 710 may include two distinct transceivers, a first transceiver for transmitting and receiving voice signals, and a second transceiver for transmitting and receiving data signals.

In addition to processing the communication signals, the DSP 720 also provides for receiver and transmitter control. For example, the gain levels applied to communication signals in the receiver 712 and transmitter 714 may be adaptively controlled through automatic gain control algorithms implemented in the DSP 720. Other transceiver control algorithms could also be implemented in the DSP 720 in order to provide more sophisticated control of the transceiver 711.

The microprocessor 738 preferably manages and controls the overall operation of the dual-mode mobile communication device 710. Many types of microprocessors or microcontrollers could be used here, or, alternatively, a single DSP 720 could be used to carry out the functions of the microprocessor 738. Low-level communication functions, including at least data and voice communications, are performed through the DSP 720 in the transceiver 711. Other, high-level communication applications, such as a voice communication application 724A, and a data communication application 724B may be stored in the Flash memory 724 for execution by the microprocessor 738. For example, the voice communication module 724A may provide a high-level user interface operable to transmit and receive voice calls between the dual-mode mobile communication device 710 and a plurality of other voice devices via the network 719. Similarly, the data communication module 724B may provide a high-level user interface operable for sending and receiving data, such as e-mail messages, files, organizer information, short text messages, etc., between the dual-mode mobile communication device 710 and a plurality of other data devices via the network 719. In the dual-mode mobile communication device 710, a component framework 206 as described above may also be implemented as a software module or application, or incorporated into one of the software modules 724A-724N.

The microprocessor 738 also interacts with other dual-mode mobile communication device subsystems, such as the display 722, Flash memory 724, random access memory (RAM) 726, auxiliary input/output (I/O) subsystems 728, serial port 730, keyboard 732, speaker 734, microphone 736, a short-range communications subsystem 740 and any other dual-mode mobile communication device subsystems generally designated as 742.

Some of the subsystems shown in Figure 9 perform communication-related functions, whereas other subsystems may provide resident or on-device functions. Notably, some subsystems, such as keyboard 732 and display 722 may be used for both communication-related functions, such as entering a text message for transmission over a data communication network, and device-resident functions such as a calculator or task list or other PDA type functions.

Operating system software used by the microprocessor 738 is preferably stored in a persistent store such as Flash memory 724. In addition to the operating system, which controls all of the low-level functions of the dual-mode mobile communication device 710, the Flash memory 724 may include a plurality of high-level software application programs, or modules, such as a voice communication module 724A, a data communication module 724B, an organizer module (not shown), or any other type of software module 724N. The Flash memory 724 also may include a file system for storing data. These modules are executed by the microprocessor 738 and provide a high-level interface between a user of the dual-mode mobile communication device and the mobile device. This interface typically includes a graphical component provided through the display 722, and an input/output component provided through the auxiliary I/O 728, keyboard 732, speaker 734, and microphone 736. The operating system, specific dual-mode mobile communication device software applications or modules, or parts thereof, may be temporarily loaded into a volatile store, such as RAM 726 for faster operation. Moreover, received communication signals may also be temporarily stored to RAM 726, before permanently writing them to a file system located in the persistent store 724.

An exemplary application module 724N that may be loaded onto the dual-mode mobile communication device 710 is a personal information manager (PIM) application providing PDA functionality, such as calendar events, appointments, and task items. This module 724N may also interact with the voice communication module 724A for managing phone calls, voice mails, etc., and may also interact with the data communication module for managing e-mail communications and other data transmissions. Alternatively, all of the functionality of the voice communication module 724A and the data communication module 724B may be integrated into the PIM module.

The Flash memory 724 preferably provides a file system to facilitate storage of PIM data items on the dual-mode mobile communication device 710. The PIM application preferably includes the ability to send and receive data items, either by itself, or in conjunction with the voice and data communication modules 724A, 724B, via the wireless network 719. The PIM data items are preferably seamlessly integrated, synchronized and updated, via the wireless network 719, with a corresponding set of data items stored or associated with a host computer system, thereby creating a mirrored system for data items associated with a particular user.

The dual-mode mobile communication device 710 may also be manually synchronized with a host system by placing the dual-mode mobile communication device 710 in an interface cradle, which couples the serial port 730 of the dual-mode mobile communication device 710 to the serial port of the host system. The serial port 730 may also be used to enable a user to set preferences through an external device or software application, or to download other application modules 724N for installation. This wired download path may be used to load an encryption key onto the dual-mode mobile communication device 710, which is a more secure method than exchanging encryption information via the wireless network 719.

Additional application modules 724N may be loaded onto the dual-mode mobile communication device 710 through the network 719, through an auxiliary I/O subsystem 728, through the serial port 730, through the short-range communications subsystem 740, or through any other suitable subsystem 742, and installed by a user in the Flash memory 724 or RAM 726. Such flexibility in application installation increases the functionality of the dual-mode mobile communication device 710 and may provide enhanced on-device functions, communication-related functions, or both. For example, secure communication applications may enable electronic commerce functions and other such financial transactions to be performed using the dual-mode mobile communication device 710.

When the dual-mode device 710 is operating in a data communication mode, a received signal, such as a text message or a web page download, will be processed by the transceiver 711 and provided to the microprocessor 738, which will preferably further process the received signal for output to the display 722, or, alternatively, to an auxiliary I/O device 728. A user of the dual-mode mobile communication device 710 may also compose data items, such as email messages, using the keyboard 732, which is preferably a complete alphanumeric keyboard laid out in the QWERTY style, although other styles of complete alphanumeric keyboards such as the known DVORAK style may also be used. User input to the dual-mode mobile communication device 710 is further enhanced with a plurality of auxiliary I/O devices 728, which may include a thumbwheel input device, a touchpad, a variety of switches, a rocker input switch, etc. The composed data items input by the user may then be transmitted over the communication network 719 via the transceiver 711.

When the dual-mode mobile communication device 710 is operating in a voice communication mode, the overall operation of the dual-mode mobile communication device 710 is substantially similar to the data mode, except that received signals are preferably be output to the speaker 734 and voice signals for transmission are generated by a microphone 736. Alternative voice or audio I/O subsystems, such as a voice message recording subsystem, may also be implemented on the dual-mode mobile communication device 710. Although voice or audio signal output is preferably accomplished primarily through the speaker 734, the display 722 may also be used to provide an indication of the identity of a calling party, the duration of a voice call, or other voice call related information. For example, the microprocessor 738, in conjunction with the voice communication module and the operating system software, may detect the caller identification information of an incoming voice call and display it on the display 722.

A short-range communications subsystem 740 is also included in the dual-mode mobile communication device 710. For example, the short-range communications subsystem 740 may include an infrared device and associated circuits and components, or a short-range wireless communication module such as a Bluetooth^{™} module or an 802.11 module to provide for communication with similarly-enabled systems and devices. Those skilled in the art will appreciate that "Bluetooth" and 802.11 refer to sets of specifications, available from the Institute of Electrical and Electronics Engineers (IEEE), relating to wireless personal area networks and wireless LANs, respectively.

Although the disclosure herein has been drawn to one or more exemplary systems and methods, many variations will be apparent to those knowledgeable in the field, and such variations are within the scope of the application. For example, although XML and a subset of ECMAScript are used in the examples provided, other languages and language variants may be used to define component applications. The proposed E4X standard scripting languages could be used in place of ECMAScript, for example. Further, other structured definition languages, than XML described above, can include such as but not limited to Resource Description Framework (RDF), XSLT, and XHTML. In addition, while the component applications are described as applications which are executed on mobile communication devices, component applications may also be executed on other computer systems, such as wireless configured personal computers.

## Claims

1. A method of interacting with a web service by a mobile communication device (100) over a network (102, 104), the method comprising the steps of:
sending a request network message for establishing communication between the web service and the mobile communication device (100);
receiving in response to the request network message a component application program (302) comprising a plurality of components (400-406), a first set of the components (400-406) having metadata descriptors expressed in a structured definition language for defining characteristics of the component application program (302) and a second set of the components (400-406) being expressed as a series of scripted instructions linking the metadata descriptors for defining a workflow of the component application program (302), the components (400-406) being configured for provisioning by a runtime environment (206) of the mobile communication device to produce an executable version of the component application program (302) configuring the mobile communication device (100) as a client of the web service;
wherein execution of the executable version facilitates a subsequent exchange of data over the network (102, 104) between the web service and the mobile communication device (100).

2. The method according to claim 1, wherein the runtime environment (206) provides an interface (220) for the executable version to the functionality of a processor (208) and an associated operating system of an infrastructure (204) of the communication device (100).

3. The method according to claim 2, wherein the runtime environment (206) is configured for implementing capabilities comprising any of; provide communications for sending a network message to the web service, provide data input by a user of the device (100) for supplying data content for a network message associated with the web service, provide data presentation in response to a network message associated with the web service, provide data storage services for maintaining local client data in a memory (210) of the device (100), and/or provide an execution environment for a scripting language for coordinating operation of the components in the executable version.

4. The method according to claim 2 or claim 3, wherein the runtime environment (206) is configured as a portion of the operating system.

5. The method according to any one of claims 2 to 4 further comprising the step of sending a network message from the communication device (100), the network message configured based on the structured definition language corresponding to at least one of the first set of components.

6. The method according to claim 5 further comprising the step of processing the network message and sending a response network message comprising message data formatted based on the structured definition language, the response network message configured for subsequent presentation of the message data on a user interface (202) of the communication device (100).

7. The method according to any one of claims 2 to 6 further comprising the step of including a data component (400) in the first set of component definitions, the data component (400) for defining information to describe data entities used by the program (302) and a format for the information.

8. The method according to claim 7 further comprising the step of including a message component (404) in the first set of component definitions, the message component (404) for defining a format of messages used by the program (302) to communicate over the network (102, 104) with the web service.

9. The method according to claim 8, wherein the data component definitions and message component definitions are platform neutral for accommodating a variety of different runtime environments.

10. The method according to claim 8 or claim 9 further comprising the step of including a presentation component (402) in the first set of components, the presentation component (402)for defining the appearance of the component application program (302) as presented on a user interface (202) of the device (100).

11. The method according to claim 10, wherein the presentation component (402) is platform specific for various predefined runtime environments.

12. The method according to claim 10 or claim 11, wherein the structured definitions language is based on extensible Markup Language.

13. The method according to any one of claims 10 to 12 further comprising the step of including a workflow component (406) in the second set of components, the workflow component (406) for defining an action to be performed when messages arrive at the wireless device.

14. The method according to any one of claims 10 to 13 further comprising the step of including a workflow component (406) in the second set of components, the workflow component (406) for defining processing that occurs when an action is to be performed as specified by one of the first set of components.

15. The method according to claim 14, wherein the series of instructions for the workflow component (406) is expressed in an object oriented programming language.

16. The method according to claim 14, wherein the series of instructions for the workflow component is expressed as a scripting language.

17. The method according to claim 16, wherein the scripting language is based on ECMA Script.

18. The method according to any one of claims 14 to 17 further comprising the step of sending a network message initiated by interaction of a user of the communication device (100) with a user interface element, the network message comprising data entities created by the workflow component (406) corresponding to the user interface element.

19. The method according to claim 18, wherein the network message is configured according to the message component (404) for comprising the data entities based on the structured definition language.

20. The method according to claim 19 further comprising the step of receiving a response network message comprising message data related to the data entities, the response network message configured for subsequent presentation of the message data on a user interface (202) of the communication device (100).

21. The method according to claim 20, wherein the message data is formatted based on the structured definition language.

22. A mobile communication device (100) configured for interacting over a network (102, 104) with a web service using an executable version of a component application program (302) comprising a plurality of components (400-406), the mobile communication device (100) comprising:
a device infrastructure (204) for operating the mobile communication device (100) comprising a processor (208) and an associated memory (210) for executing the executable version;
a user interface (202) coupled to the device infrastructure (206) having an input device and an output device configured for communication with the executable version;
a wireless transceiver (200) coupled to the device infrastructure (206) and configured for communicating with the network (102, 104); and
a runtime environment (206) for processing the component application program (302) to generate the executable version for configuring the mobile communication device (100) a client of the web service, the runtime environment (206) configured for processing with a first set of the components having metadata descriptors expressed in a structured definition language for defining characteristics of the component application program (302) and a second set of the components being expressed as a series of scripted instructions linking the metadata descriptors for defining a workflow of the component application program (302);
wherein the execution of the executable version facilitates a subsequent exchange of data over the network (102, 104) between the web service and the mobile communication device (100).

23. The mobile communication device (100) according to claim 22, wherein the runtime environment (206) provides an interface (220) for the executable version to the functionality of the processor (208) and the associated operating system of the infrastructure (204) of the communication device (100).

24. The mobile communication device (100) according to claim 23, wherein the runtime environment (206) is configured for implementing capabilities comprising any of; provide communications for sending a network message to the web service, provide data input by a user of the device (100) for supplying data content for a network message associated with the web service, provide data presentation in response to a network message associated with the web service, provide data storage services for maintaining local client data in a memory (210) of the device (100), and/or provide an execution environment for a scripting language for coordinating operation of the components in the executable version.

25. The mobile communication device (100) according to claim 23 or claim 24, wherein the runtime environment (206) is configured as a portion of the operating system.

26. The mobile communication device (100) according to any one of claims 23 to 25, wherein the executable version is configured for sending a network message to the web service, the network message configured based on the structured definition language corresponding to at least one of the first set of components.

27. The mobile communication device (100) according to claim 26, wherein the executable version is configured for receiving a response network message corresponding to the network message, the response network message for comprising message data formatted based on the structured definition language, the response network message is configured for subsequent presentation of the message data on the user interface (202) of the communication device (100).

28. The mobile communication device (100) according to any one of claims 23 to 27 further comprising a data component (400) in the first set of component definitions, the data component (400) for defining information to describe data entities used by the program (302) and a format for the information.

29. The mobile communication device (100) according to claim 28 further comprising a message component (404) in the first set of component definitions, the message component (404) for defining a format of messages used by the program (302) to communicate over the network (102, 104) with the web service.

30. The mobile communication device (100) according to claim 29, wherein the data component definitions and message component definitions are platform neutral for accommodating a variety of different runtime environments.

31. The mobile communication device (100) according to claim 29 or claim 30 further comprising a presentation component (402) in the first set of components, the presentation component (402) for defining the appearance of the component application program (302) as presented on the user interface (202) of the device (100).

32. The mobile communication device (100) according to claim 31, wherein the presentation component (402) is platform specific for various predefined runtime environments.

33. The mobile communication device (100) according to claim 31 or claim 32, wherein the structured definition language is based on extensible Markup Language.

34. The mobile communication device (100) according to any one of claims 31 to 33 further comprising a workflow component (406) in the second set of components, the workflow component (406) for defining processing that occurs when an action is to be performed as specified by one of the first set of components.

35. The mobile communication device (100) according to claim 34, wherein the series of instructions for the workflow component (406) is expressed in an object oriented programming language.

36. The mobile communication device (100) according to claim 34, wherein the series of instructions for the workflow component (406) is expressed as a scripting language.

37. The mobile communication device (100) according to claim 36, wherein the scripting language is based on ECMA Script.

38. The mobile communication device (100) according to any one of claims 34 to 37, wherein the executable version is configured for sending a network message initiated by interaction of a user of the communication device (100) with a user interface element, the network message comprising ata entities created by the workflow component (406) corresponding to the user interface element.

39. The mobile communication device (100) according to claim 38, wherein the network message is configured according to the message component (404) fo omprising the data entities based on the structured definition language.

40. The mobile communication device (100) according to claim 39, wherein the executable version is configured for receiving a response network message comprising message data related to the data entities, the response network message configured for subsequent presentation of the message data on the user interface (202) of the communication device (100).

41. The mobile communication device (100) according to claim 40, wherein the message data is formatted based on the structured definition language.

42. A computer program product for configuring a mobile communication device (100) for interacting over a network (102, 104) with a web service using an executable version of a component application (302) comprising a plurality of components (400-406), the computer program product comprising a computer readable medium embodying program code means executable by a processor (208) of the mobile communication device (100) for implementing the method of any one of claims I to 21.

43. A server (106, 110) configured for providing a web service for interacting with a mobile communication device (100) over a network (102, 104), the server comprising:
a network interface for receiving a request network message to establish communication between the web service and the mobile communication device (100); and
a component application program coupled to the network interface for sending in response to the request network message a component application program comprising a plurality of components, a first set of the components having metadata descriptors expressed in a structured definition language for defining characteristics of the component application program and a second set of the components being expressed as a series of scripted instructions linking the metadata descriptors for defining a workflow of the component application program, the components being configured for provisioning by a runtime environment (206) of the mobile communication device (100) to produce an executable version of the component application program configuring the device (100) as aclient of the web service;
wherein the execution of the executable version facilitates a subsequent exchange of data over the network (102, 104) between the web service and the mobile communication device (100).

44. A communication system (10) comprising at least one mobile communication device (100) according to any one of claims 22 to 41 and/or at least one server (106, 110) according to claim 43.

## Patentansprüche

1. Verfahren zur Interaktion eines mobilen Kommunikationsgeräts (100) mit einem Netzwerkdienst über ein Netzwerk (102, 104), wobei das Verfahren die Schritte umfasst:
Senden einer Anfragenetzwerknachricht zum Aufbauen einer Kommunikation zwischen dem Netzwerkdienst und dem mobilen Kommunikationsgerät (100);
Empfangen als Antwort auf die Anfragenetzwerknachricht eines Komponentenanwendungsprograms (302), welches eine Vielzahl an Komponenten (400-406) umfasst, wobei ein erstes Set der Komponenten (400-406) Metadatenbeschreiber aufweist, welche in einer strukturierten Definitionssprache ausgedrückt sind, um die Charakteristiken des Komponentenanwendungsprograms (302) zu definieren, und ein zweites Set der Komponenten (400-406) ausgedrückt wird, als eine Serie schriftlicher Anweisungen, welche die Metadatenbeschreiber verknüpfen,
um einen Arbeitsfluss des Komponentenanwendungsprograms zu (302) zu definieren, wobei die Komponenten (400-406) konfiguriert sind, von einer Laufzeitumgebung (206) des mobilen Kommunikationsgeräts bereitgestellt zu werden, um eine ausführbare Version des Komponentenanwendungsprograms (302) zu erstellen, welche das mobile Kommunikationsgerät (100) als einen Dienstnehmer des Netzwerkdienstes konfiguriert;
wobei die Ausführung der ausführbaren Version einen nachfolgenden Datenaustausch über das Netzwerk (102, 104) zwischen dem Netzwerkdienst und dem mobilen Kommunikationsgerät (100) ermöglicht.

2. Verfahren gemäß Anspruch 1, wobei die Laufzeitumgebung (206) eine Schnittstelle (220) für die ausführbare Version zu der Funktionalität eines Prozessors (208) und eines zugeordneten Betriebssystems einer Infrastruktur (204) des Kommunikationsgeräts (100) bereitstellt.

3. Verfahren gemäß Anspruch 2, wobei die Laufzeitumgebung (206) konfiguriert ist, Fähigkeiten zu implementieren, welche umfassen, irgendeines von; Bereitstellen von Kommunikationen zum Senden einer Netzwerknachricht zum Netzwerkservice, Bereitstellen einer Dateneingabe von einem Benutzer des Geräts (100) zum Beschaffen von Dateninhalt für eine Netzwerknachricht, welche mit dem Netzwerkdienst verknüpft ist, Bereitstellen einer Datenanzeige als Antwort auf eine Netzwerknachricht, welche mit dem Netzwerkdienst verknüpft ist, Bereitstellen von Datenspeicherdiensten zum Aufrechterhalten lokaler Dienstnehmerdaten auf einem Speicher (210) des Geräts (100), und/oder Bereitstellen einer Ausführungsumgebung für eine Skriptsprache zum Koordinieren des Betriebs der Komponenten in der ausführbaren Version.

4. Verfahren gemäß Anspruch 2 oder Anspruch 3, wobei die Laufzeitumgebung (206) als ein Teil des Betriebssystems konfiguriert ist.

5. Verfahren gemäß irgendeinem der Ansprüche 2 bis 4, welches ferner den Schritt umfasst, Senden einer Netzwerknachricht vom Kommunikationsgerät (100), wobei die Netzwerknachricht basierend auf der strukturierten Definitionssprache, korrespondierend zu zumindest einer des ersten Sets von Komponenten, konfiguriert ist.

6. Verfahren gemäß Anspruch 5, welches ferner den Schritt umfasst, Verarbeiten der Netzwerknachricht und Senden einer Antwortnetzwerknachricht, welche Nachrichtendaten umfasst, welche basierend auf der strukturierten Definitionssprache formatiert sind, wobei die Antwortnetzwerknachricht für eine nachfolgende Anzeige der Nachrichtendaten auf einer Benutzerschnittstelle (202) des Kommunikationsgeräts (100) konfiguriert ist.

7. Verfahren gemäß irgendeinem der Ansprüche 2 bis 6, welches ferner den Schritt umfasst, Einfügen einer Datenkomponente (400) in das erste Set von Komponentendefinitionen, wobei die Datenkomponente (400) Information definiert, um Dateneinheiten zu beschreiben, welche von dem Program (302) benutzt werden, und ein Format für die Information definiert.

8. Verfahren gemäß Anspruch 7, welches ferner den Schritt umfasst, Einfügen einer Nachrichtenkomponente (404) in das erste Set von Komponentendefinitionen, wobei die Nachrichtenkomponente (404) ein Format von Nachrichten definiert, welche von dem Program (302) benutzt werden, um über das Netzwerk (102, 104) mit dem Netzwerkdienst zu kommunizieren.

9. Verfahren gemäß Anspruch 8, wobei die Datenkomponentendefinitionen und die Nachrichtenkomponentendefinitionen plattformunabhängig sind, um einer Vielfalt an verschiedenen Laufzeitumgebungen Rechnung zu tragen.

10. Verfahren gemäß Anspruch 8 oder Anspruch 9, welches ferner den Schritt umfasst, Einfügen einer Anzeigekomponente (402) in das erste Set von Komponenten, wobei die Anzeigekomponente (402) das Erscheinungsbild des Komponentenanwendungsprograms (302), wie angezeigt auf einer Benutzerschnittstelle (202) des Geräts (100), definiert.

11. Verfahren gemäß Anspruch 10, wobei die Anzeigekomponente (402) plattformspezifisch für verschiedene vordefinierte Laufzeitumgebungen ist.

12. Verfahren gemäß Anspruch 10 oder Anspruch 11, wobei die strukturierte Definitionensprache auf eXtensible Markup Language basiert.

13. Verfahren gemäß irgendeinem der Ansprüche 10 bis 12, welches ferner den Schritt umfasst, Einfügen einer Arbeitsflußkomponente (406) in das zweite Set von Komponenten, wobei die Arbeitsflußkomponente (406) eine Aktion definiert, welche ausgeführt wird, wenn Nachrichten auf dem drahtlosen Gerät ankommen.

14. Verfahren gemäß irgendeinem der Ansprüche 10 bis 13, welches ferner den Schritt umfasst, Einfügen einer Arbeitsflußkomponente (406) in das zweite Set von Komponenten, wobei die Arbeitsflußkomponente (406) eine Bearbeitung definiert, welche auftritt, wenn eine Aktion, wie in einer des ersten Sets von Komponenten spezifiziert, ausgeführt wird.

15. Verfahren gemäß Anspruch 14, wobei die Serie von Anweisungen für die Arbeitsflußkomponente (406) in einer objektorientierten Programmiersprache ausgedrückt wird.

16. Verfahren gemäß Anspruch 14, wobei die Serie von Anweisungen für die Arbeitsflußkomponente als eine Skriptsprache ausgedrückt wird.

17. Verfahren gemäß Anspruch 16, wobei die Skriptsprache auf ECMA Script basiert.

18. Verfahren gemäß irgendeinem der Ansprüche 14 bis 17, welches ferner den Schritt umfasst, Senden einer Netzwerknachricht, welche durch Interaktion eines Benutzers des Kommunikationsgeräts (100) mit einem Benutzerschnittstellenelement ausgelöst wird, wobei die Netzwerknachricht Dateneinheiten umfasst, welche von der Arbeitsflußkomponente (406), welche zu dem Benutzerschnittstellenelement korrespondiert, erzeugt werden.

19. Verfahren gemäß Anspruch 18, wobei die Netzwerknachricht gemäß der Nachrichtenkomponente (404) konfiguriert ist, zum Umfassen der Dateneinheiten, basierend auf der strukturierten Definitionssprache.

20. Verfahren gemäß Anspruch 19, welches ferner den Schritt umfasst, Empfangen einer Antwortnetzwerknachricht, welche Nachrichtendaten umfasst, welche mit den Dateneinheiten in Beziehung stehen, wobei die Antwortnetzwerknachricht für eine nachfolgende Anzeige der Nachrichtendaten auf einer Benutzerschnittstelle (202) des Kommunikationsgeräts (100) konfiguriert ist.

21. Verfahren gemäß Anspruch 20, wobei die Nachrichtendaten auf der strukturierten Definitionssprache basierend formatiert sind.

22. Mobiles Kommunikationsgerät (100) konfiguriert zum Interagieren mit einem Netzwerkdienst über ein Netzwerk (102, 104), unter Benutzung einer ausführbaren Version eines Komponentenanwendungsprograms (302), welches eine Vielzahl von Komponenten (400-406) umfasst, wobei das mobile Kommunikationsgerät (100) umfasst:
eine Geräteinfrastruktur (204) zum Betreiben des mobilen Kommunikationsgeräts (100), welches einen Prozessor (208) und einen dazugehörigen Speicher (210), zum Ausführen der ausführbaren Version, u mfasst;
eine Benutzerschnittstelle (202), gekoppelt zu der Geräteinfrastruktur (206), mit einem Eingabegerät und einem Ausgabegerät, konfiguriert für die Kommunikation mit der ausführbaren Version;
ein drahtloser Sendeempfänger (200), gekoppelt zu der Geräteinfrastruktur (206) und konfiguriert für die Kommunikation mit dem Netzwerk (102, 104); und
eine Laufzeitumgebung (206) zum Betreiben des Komponentenanwendungsprograms (302), zum Erzeugen der ausführbaren Version, welche das mobile Kommunikationsgerät (100) als einen Dienstnehmer des Netzwerkdienst konfiguriert, wobei die Laufzeitumgebung (206) konfiguriert ist zum Betrieb mit einem ersten Set von Komponenten (400-406), welche Metadatenbeschreiber aufweisen,
welche in einer strukturierten Definitionssprache ausgedrückt sind, um die Charakteristiken des Komponentenanwendungsprogram (302) zu definieren, und einem zweiten Set von Komponenten (400-406), welche ausgedrückt werden als eine Serie schriftlicher Anweisungen, welche die Metadatenbeschreiber verknüpfen, um einen Arbeitsfluss des Komponentenanwendungsprograms zu (302) zu definieren;
wobei die Ausführung der ausführbaren Version einen nachfolgenden Datenaustausch über das Netzwerk (102, 104) zwischen dem Netzwerkdienst und dem mobilen Kommunikationsgerät (100) ermöglicht.

23. Mobiles Kommunikationsgerät (100) gemäß Anspruch 22, wobei die Laufzeitumgebung (206) eine Schnittstelle (220) für die ausführbare Version zu der Funktionalität eines Prozessors (208) und dem zugeordneten Betriebssystem der Infrastruktur (204) des Kommunikationsgeräts (100) bereitstellt.

24. Mobiles Kommunikationsgerät (100) gemäß Anspruch 23, wobei die Laufzeitumgebung (206) konfiguriert ist Fähigkeiten zu implementieren, welche umfassen irgendeines von; Bereitstellen von Kommunikationen zum Senden einer Netzwerknachricht zum Netzwerkservice, Bereitstellen einer Dateneingabe von einem Benutzer des Geräts (100) zum Beschaffen von Dateninhalt für eine Netzwerknachricht, welche mit dem Netzwerkdienst verknüpft ist, Bereitstellen einer Datenanzeige als Antwort auf eine Netzwerknachricht, welche mit dem Netzwerkdienst verknüpft ist, Bereitstellen von Datenspeicherdiensten zum Aufrechterhalten lokaler Dienstnehmerdaten auf einem Speicher (210) des Geräts (100), und/oder Bereitstellen einer Ausführungsumgebung für eine Skriptsprache zum Koordinieren des Betriebs der Komponenten in der ausführbaren Version.

25. Mobiles Kommunikationsgerät (100) gemäß Anspruch 23 oder Anspruch 24, wobei die Laufzeitumgebung (206) als ein Teil des Betriebssystems konfiguriert ist.

26. Mobiles Kommunikationsgerät (100) gemäß irgendeinem der Ansprüche 23 bis 25, wobei die ausführbare Version konfiguriert ist zum Senden einer Netzwerknachricht an den Netzwerkdienst, wobei die Netzwerknachricht basierend auf der strukturierten Definitionssprache, korrespondierend zu zumindest einer des ersten Sets von Komponenten, konfiguriert ist.

27. Mobiles Kommunikationsgerät (100) gemäß Anspruch 26, wobei die ausführbare Version konfiguriert ist zum Empfangen einer Antwortnetzwerknachricht, welche Nachrichtendaten umfasst, welche basierend auf der strukturierten Definitionssprache formatiert sind, wobei die Antwortnetzwerknachricht für eine nachfolgende Anzeige der Nachrichtendaten auf einer Benutzerschnittstelle (202) des Kommunikationsgeräts (100) konfiguriert ist.

28. Mobiles Kommunikationsgerät (100) gemäß irgendeinem der Ansprüche 23 bis 27, welches ferner umfasst eine Datenkomponente (400) in dem ersten Set von Komponentendefinitionen, wobei die Datenkomponente (400) Information definiert, um Dateneinheiten zu beschreiben, welche von dem Program (302) benutzt werden, und ein Format für die Information definiert.

29. Mobiles Kommunikationsgerät (100) gemäß Anspruch 28, welches ferner umfasst eine Nachrichtenkomponente (404) in dem ersten Set von Komponentendefinitionen, wobei die Nachrichtenkomponente (404) ein Format von Nachrichten definiert, welche von dem Program (302) benutzt werden, um über das Netzwerk (102, 104) mit dem Netzwerkdienst zu kommunizieren.

30. Mobiles Kommunikationsgerät (100) gemäß Anspruch 29, wobei die Datenkomponentendefinitionen und die Nachrichtenkomponentendefinitionen plattformunabhängig sind, um einer Vielfalt an verschiedenen Laufzeitumgebungen Rechnung zu tragen.

31. Mobiles Kommunikationsgerät (100) gemäß Anspruch 29 oder Anspruch 30, welches ferner umfasst eine Anzeigekomponente (402) in dem ersten Set von Komponenten, wobei die Anzeigekomponente (402) das Erscheinungsbild des Komponentenanwendungsprograms (302), wie angezeigt auf einer Benutzerschnittstelle (202) des Geräts (100), definiert.

32. Mobiles Kommunikationsgerät (100) gemäß Anspruch 31, wobei die Anzeigekomponente (402) plattformspezifisch für verschiedene vordefinierte Laufzeitumgebungen ist.

33. Mobiles Kommunikationsgerät (100) gemäß Anspruch 31 oder Anspruch 32, wobei die strukturierte Definitionssprache auf eXtensible Markup Language basiert.

34. Mobiles Kommunikationsgerät (100) gemäß irgendeinem der Ansprüche 31 bis 33, welches ferner umfasst eine Arbeitsflußkomponente (406) in dem zweiten Set von Komponenten, wobei die Arbeitsflußkomponente (406) ein Bearbeiten definiert, welches auftritt, wenn eine Aktion, wie in einer des ersten Sets von Komponenten spezifiziert, ausgeführt werden soll.

35. Mobiles Kommunikationsgerät (100) gemäß Anspruch 34, wobei die Serie von Anweisungen für die Arbeitsflußkomponente (406) in einer objektorientierten Programmiersprache ausgedrückt wird.

36. Mobiles Kommunikationsgerät (100) gemäß Anspruch 34, wobei die Serie von Anweisungen für die Arbeitsflußkomponente als eine Skriptsprache ausgedrückt wird.

37. Mobiles Kommunikationsgerät (100) gemäß Anspruch 36, wobei die Skriptsprache auf ECMA Script basiert.

38. Mobiles Kommunikationsgerät (100) gemäß irgendeinem der Ansprüche 34 bis 37, wobei die ausführbare Version konfiguriert ist zum Senden einer Netzwerknachricht, welche durch Interaktion eines Benutzers des Kommunikationsgeräts (100) mit einem Benutzerschnittstellenelement ausgelöst wird, wobei die Netzwerknachricht Dateneinheiten umfasst, welche von der Arbeitsflußkomponente (406), welche zu dem Benutzerschnittstellenelement korrespondiert, erzeugt werden.

39. Mobiles Kommunikationsgerät (100) gemäß Anspruch 38, wobei die Netzwerknachricht gemäß der Nachrichtenkomponente (404) konfiguriert ist, zum Umfassen der Dateneinheiten, basierend auf der strukturierten Definitionssprache.

40. Mobiles Kommunikationsgerät (100) gemäß Anspruch 39, wobei die ausführbare Version konfiguriert ist zum Empfangen einer Antwortnetzwerknachricht, welche Nachrichtendaten umfasst, welche den Dateneinheiten zugehörig sind, wobei die Antwortnetzwerknachricht für eine nachfolgende Anzeige der Nachrichtendaten auf einer Benutzerschnittstelle (202) des Kommunikationsgeräts (100) konfiguriert ist.

41. Mobiles Kommunikationsgerät (100) gemäß Anspruch 40, wobei die Nachrichtendaten auf der strukturierten Definitionssprache basierend formatiert sind.

42. Computerprogramprodukt zum Konfigurieren eines mobilen Kommunikationsgeräts (100) zum Interagieren mit einem Netzwerkdienst über ein Netzwerk (102, 104), unter Benutzung einer ausführbaren Version eines Komponentenanwendungsprograms (302), welches eine Vielzahl von Komponenten (400-406) umfasst, wobei das Computerprogramprodukt ein computerlesbares Medium umfasst, welches Programmcodemittel verkörpert, welche von einem Prozessor (208) des mobilen Kommunikationsgeräts (100) ausführbar sind, zum Implementieren des Verfahrens irgendeines der Ansprüche 1 bis 21.

43. Netzwerkserver (106, 110) konfiguriert zum Bereitstellen eines Netzwerkdienstes zum Interagieren mit einem mobilen Kommunikationsgerät (100) über ein Netzwerk (102, 104), wobei der Server umfasst:
eine Netzwerkschnittstelle zum Empfangen einer Anfragenetzwerknachricht zum Aufbauen einer Kommunikation zwischen dem Netzwerkdienst und dem mobilen Kommunikationsgerät (100); und
ein Komponentenanwendungsprogram, gekoppelt an die Netzwerkschnittstelle, zum Senden, in Antwort auf die Anfragenetzwerknachricht, eines Komponentenanwendungsprograms,
welches eine Vielzahl von Komponenten umfasst, ein erstes Set von Komponenten, welche Metadatenbeschreiber aufweisen, welche in einer strukturierten Definitionssprache ausgedrückt sind, um die Charakteristiken des Komponentenanwendungsprogram zu definieren,
und ein zweites Set von Komponenten, welche ausgedrückt werden als eine Serie schriftlicher Anweisungen, welche die Metadatenbeschreiber verknüpfen, um einen Arbeitsfluss des
Komponentenanwendungsprograms zu definieren, wobei die Komponenten konfiguriert sind von einer Laufzeitumgebung (206) des mobilen Kommunikationsgeräts (100) bereitgestellt zu werden, zur Erzeugung einer ausführbaren Version des Komponentenanwendungsprograms, welches das Gerät (100) als Dienstnehmer des Netzwerkdienstes konfiguriert;
wobei die Ausführung der ausführbaren Version einen nachfolgenden Datenaustausch über das Netzwerk (102, 104) zwischen dem Netzwerkdienst und dem mobilen Kommunikationsgerät (100) ermöglicht.

44. Kommunikationssystem (10), welches zumindest ein mobiles Kommunikationsgerät (100) gemäß irgendeinem der Ansprüche 21 bis 41 und/oder zumindest einen Server (106, 110) gemäß Anspruch 43 umfasst.

## Revendications

1. Procédé d'interaction d'un dispositif de communication mobile (100) avec un service web via un réseau (102, 104), le procédé comprenant les étapes consistant à _{:}
envoyer un message réseau de demande afin d'établir la communication entre le service web et le dispositif de communication mobile (100) ;
recevoir en réponse au message réseau de demande un programme applicatif à base de composants (302) comprenant une pluralité de composants (400 à 406), un premier ensemble des composants (400 à 406) possédant des descripteurs de métadonnées exprimés dans un langage de définition structuré afin de définir des caractéristiques du programme applicatif à base de composants (302) et un second ensemble des composants (400 à 406) étant exprimé sous la forme d'une série d'instructions de script reliant les descripteurs de métadonnées afin de définir une séquence de travail du programme applicatif à base de composants (302), les composants (400 à 406) étant configurés pour qu'un environnement d'exécution (206) du dispositif de communication mobile (100) effectue une configuration afin de produire une version exécutable du programme applicatif à base de composants (302), dans le but de configurer le dispositif de communication mobile (100) comme client du service web ;
dans lequel l'exécution de la version exécutable facilite un échange ultérieur de données sur le réseau (102, 104) entre le service web et le dispositif de communication mobile (100).

2. Procédé selon la revendication 1, dans lequel l'environnement d'exécution (206) fournit à la version exécutable une interface avec les fonctionnalités d'un processeur (208) et avec un système d'exploitation associé appartenant à une infrastructure (204) du dispositif de communication (100).

3. Procédé selon la revendication 2, dans lequel l'environnement d'exécution (206) est configuré pour mettre en oeuvre des capacités parmi les suivantes : fourniture de communications pour l'envoi d'un message réseau au service web, fourniture de données saisies par un utilisateur du dispositif (100) afin de fournir un contenu de données pour un message réseau associé au service web, fourniture d'une présentation de données en réponse à un message réseau associé au service web, fourniture de services de stockage de données pour gérer des données locales du client dans une mémoire (210) du dispositif (100) et/ou fourniture d'un environnement d'exécution pour un langage de script, afin de coordonner le fonctionnement des composants dans la version exécutable.

4. Procédé selon la revendication 2 ou la revendication 3, dans lequel l'environnement d'exécution (206) est configuré comme une partie du système d'exploitation.

5. Procédé selon l'une quelconque des revendications 2 à 4, comprenant en outre l'étape consistant à envoyer un message réseau à partir du dispositif de communication (100), le message réseau étant configuré sur la base du langage de définition structuré correspondant à au moins un composant dans le premier ensemble de composants.

6. Procédé selon la revendication 5, comprenant en outre l'étape consistant à traiter le message réseau et à envoyer un message réseau de réponse comprenant des données de message formatées sur la base du langage de définition structuré, le message réseau de réponse étant configuré pour une présentation ultérieure des données du message sur une interface utilisateur (202) du dispositif de communication (100).

7. Procédé selon l'une quelconque des revendications 2 à 6, comprenant en outre l'étape consistant à inclure un composant de données (400) dans le premier ensemble de définitions de composants, le composant de données (400) étant destiné à définir des informations afin de décrire des entités de données utilisées par le programme (302) ainsi qu'un format pour les informations.

8. Procédé selon la revendication 7, comprenant en outre l'étape consistant à inclure un composant de message (404) dans le premier ensemble de définitions de composants, le composant de message (404) étant destiné à définir un format des messages utilisés par le programme (302) pour communiquer avec le service web sur le réseau (102, 104).

9. Procédé selon la revendication 8, dans lequel les définitions de composant de données et les définitions de composant de message sont neutres au regard de la plate-forme, afin d'autoriser une variété d'environnements d'exécution différents.

10. Procédé selon la revendication 8 ou la revendication 9, comprenant en outre l'étape consistant à inclure un composant de présentation (402) dans le premier ensemble de composants, le composant de présentation (402) étant destiné à définir l'aspect du programme applicatif à base de composants (302) lorsqu'il est présenté sur une interface utilisateur (202) du dispositif (100).

11. Procédé selon la revendication 10, dans lequel le composant de présentation (402) est spécifique à la plate-forme pour différents environnements d'exécution prédéterminés.

12. Procédé selon la revendication 10 ou 11, dans lequel le langage de définition structuré est fondé sur le langage de balisage extensible, XML pour « *eXtensible Markup Language* ».

13. Procédé selon l'une quelconque des revendications 10 à 12, comprenant en outre l'étape consistant à inclure un composant de flux de travail (406) dans le second ensemble de composants, le composant de flux de travail (406) étant destiné à définir une action à exécuter lorsque des messages arrivent au dispositif sans fil.

14. Procédé selon l'une quelconque des revendications 10 à 13, comprenant en outre l'étape consistant à inclure un composant de flux de travail (406) dans le second ensemble de composants, le composant de flux de travail (406) étant destiné à définir le traitement qui se produit lorsqu'une action doit être exécutée, selon ce que spécifie un composant du premier ensemble de composants.

15. Procédé selon la revendication 14, dans lequel la série d'instructions pour le composant de flux de travail (406) est exprimée dans un langage de programmation orienté objets.

16. Procédé selon la revendication 14, dans lequel la série d'instructions du composant de flux de travail est exprimée sous la forme d'un langage de script.

17. Procédé selon la revendication 16, dans lequel le langage de script est fondé sur le langage Script de l'ECMA.

18. Procédé selon l'une quelconque des revendications 14 à 17, comprenant en outre l'étape consistant à envoyer un message réseau, en réponse à l'interaction d'un utilisateur du dispositif de communication (100) avec un élément de l'interface utilisateur, le message réseau comprenant des entités de données créées par le composant de flux de travail (406) en fonction de l'élément de l'interface utilisateur.

19. Procédé selon la revendication 18, dans lequel le message réseau est configuré en fonction du composant de message (404) afin de comprendre les entités de données sur la base du langage de définition structuré.

20. Procédé selon la revendication 19, comprenant en outre l'étape consistant à recevoir un message réseau de réponse comprenant des données de message liées aux entités de données, le message réseau de réponse étant configuré pour une présentation ultérieure des données de message sur une interface utilisateur (202) du dispositif de communication (100).

21. Procédé selon la revendication 20, dans lequel les données de message sont formatées sur la base du langage de définition structuré.

22. Dispositif de communication mobile (100) configuré pour interagir avec un service web, via un réseau (102, 104), en utilisant une version exécutable d'un programme applicatif à base de composants (302) comprenant une pluralité de composants (400 à 406), le dispositif de communication mobile (100) comprenant :
une infrastructure de dispositif (204) destinée à faire fonctionner le dispositif de communication mobile (100), comprenant un processeur (208) et une mémoire associée (210) pour exécuter la version exécutable ;
une interface utilisateur (202) couplée à l'infrastructure de dispositif (204), comprenant un dispositif d'entrée et un dispositif de sortie configurés pour communiquer avec la version exécutable ;
un émetteur-récepteur sans fil (200) couplé à l'infrastructure de dispositif (204) et configuré pour communiquer avec le réseau (102, 104) ; et
un environnement d'exécution (206), destiné à traiter le programme applicatif à base de composants (302) afin de produire la version exécutable, dans le but de configurer le dispositif de communication mobile (100) comme client du service web, l'environnement d'exécution (206) étant configuré pour effectuer le traitement à l'aide d'un premier ensemble des composants possédant des descripteurs de métadonnées exprimés dans un langage de définition structuré afin de définir des caractéristiques du programme applicatif à base de composants (302) et d'un second ensemble des composants qui sont exprimés sous la forme d'une série d'instructions de script reliant les descripteurs de métadonnées afin de définir une séquence de travail du programme applicatif à base de composants (302) ;
dans lequel l'exécution de la version exécutable facilite un échange ultérieur de données sur le réseau (102, 104) entre le service web et le dispositif de communication mobile (100).

23. Dispositif de communication mobile (100) selon la revendication 22, dans lequel l'environnement d'exécution (206) fournit à la version exécutable une interface avec les fonctionnalités du processeur (208) et avec le système d'exploitation associé, au sein de l'infrastructure (204) du dispositif de communication (100).

24. Dispositif de communication mobile (100) selon la revendication 23, dans lequel l'environnement d'exécution (206) est configuré pour mettre en oeuvre des capacités parmi les suivantes : fourniture de communications pour l'envoi d'un message réseau au service web, fourniture de données saisies par un utilisateur du dispositif (100) afin de fournir un contenu de données pour un message réseau associé au service web, fourniture d'une présentation de données en réponse à un message réseau associé au service web, fourniture de services de stockage de données pour gérer des données locales du client dans une mémoire (210) du dispositif (100) et/ou fourniture d'un environnement d'exécution pour un langage de script, afin de coordonner le fonctionnement des composants dans la version exécutable.

25. Dispositif de communication mobile (100) selon la revendication 23 ou la revendication 24, dans lequel l'environnement d'exécution (206) est configuré comme une partie du système d'exploitation.

26. Dispositif de communication mobile (100) selon l'une quelconque des revendications 23 à 25, dans lequel la version exécutable est configurée pour envoyer un message réseau au service web, le message réseau étant configuré sur la base du langage de définition structuré correspondant à au moins un composant dans le premier ensemble de composants.

27. Dispositif de communication mobile (100) selon la revendication 26, dans lequel la version exécutable est configurée pour recevoir un message réseau de réponse correspondant au message réseau, le message réseau de réponse comprenant des données de message formatées sur la base du langage de définition structuré, le message réseau de réponse étant configuré pour une présentation ultérieure des données du message sur l'interface utilisateur (202) du dispositif de communication (100).

28. Dispositif de communication mobile (100) selon l'une quelconque des revendications 23 à 27, comprenant en outre un composant de données (400) dans le premier ensemble de définitions de composants, le composant de données (400) étant destiné à définir des informations afin de décrire des entités de données utilisées par le programme (302) ainsi qu'un format pour les informations.

29. Dispositif de communication mobile (100) selon la revendication 28, comprenant en outre un composant de message (404) dans le premier ensemble de définitions de composants, le composant de message (404) étant destiné à définir un format des messages utilisés par le programme (302) pour communiquer avec le service web sur le réseau (102, 104).

30. Dispositif de communication mobile (100) selon la revendication 29, dans lequel les définitions de composant de données et les définitions de composant de message sont neutres au regard de la plate-forme, afin d'autoriser une variété d'environnements d'exécution différents.

31. Dispositif de communication mobile (100) selon la revendication 29 ou la revendication 30, comprenant en outre un composant de présentation (402) dans le premier ensemble de composants, le composant de présentation (402) étant destiné à définir l'aspect du programme applicatif à base de composants (302) lorsqu'il est présenté sur l'interface utilisateur (202) du dispositif (100).

32. Dispositif de communication mobile (100) selon la revendication 31, dans lequel le composant de présentation (402) est spécifique à la plate-forme pour différents environnements d'exécution prédéterminés.

33. Dispositif de communication mobile (100) selon la revendication 31 ou la revendication 32, dans lequel le langage de définition structuré est fondé sur le langage de balisage extensible XML.

34. Dispositif de communication mobile (100) selon l'une quelconque des revendications 31 à 33, comprenant en outre un un composant de flux de travail (406) dans le second ensemble de composants, le composant de flux de travail (406) étant destiné à définir le traitement qui se produit lorsqu'une action doit être exécutée, selon ce que spécifie un composant du premier ensemble de composants.

35. Dispositif de communication mobile (100) selon la revendication 34, dans lequel la série d'instructions pour le composant de flux de travail (406) est exprimée dans un langage de programmation orienté objets.

36. Dispositif de communication mobile (100) selon la revendication 34, dans lequel la série d'instructions du composant de flux de travail est exprimée sous la forme d'un langage de script.

37. Dispositif de communication mobile (100) selon la revendication 36, dans lequel le langage de script est fondé sur le langage Script de l'ECMA.

38. Dispositif de communication mobile (100) selon l'une quelconque des revendications 34 à 37, dans lequel la version exécutable est configurée pour envoyer un message réseau, en réponse à l'interaction d'un utilisateur du dispositif de communication (100) avec un élément de l'interface utilisateur, le message réseau comprenant des entités de données créées par le composant de flux de travail (406) en fonction de l'élément de l'interface utilisateur.

39. Dispositif de communication mobile (100) selon la revendication 38, dans lequel le message réseau est configuré en fonction du composant de message (404) afin de comprendre les entités de données sur la base du langage de définition structuré.

40. Dispositif de communication mobile (100) selon la revendication 39, dans lequel la version exécutable est configurée pour recevoir un message réseau de réponse comprenant des données de message liées aux entités de données, le message réseau de réponse étant configuré pour une présentation ultérieure des données de message sur l'interface utilisateur (202) du dispositif de communication (100).

41. Dispositif de communication mobile (100) selon la revendication 40, dans lequel les données de message sont formatées sur la base du langage de définition structuré.

42. Progiciel d'ordinateur destiné à configurer un dispositif de communication mobile (100) afin d'interagir via un réseau (102, 104) avec un service web à l'aide d'une version exécutable d'une application à base de composants (302) comprenant une pluralité de composants (400 à 406), le progiciel d'ordinateur comprenant un support lisible par ordinateur matérialisant un moyen de code de programme pouvant être exécuté par un processeur (208) du dispositif de communication mobile (100) afin de mettre en oeuvre le procédé selon l'une quelconque des revendications 1 à 21.

43. Serveur (106, 110), configuré pour fournir un service web afin d'interagir avec un dispositif de communication mobile (100) via un réseau (102, 104), le serveur comprenant :
une interface de réseau destinée à recevoir un message réseau de demande afin d'établir une communication entre le service web et le dispositif de communication mobile (100) ; et
un programme applicatif à base de composants, couplé à l'interface de réseau, destiné à envoyer en réponse au message réseau de demande un programme applicatif à base de composants, comprenant une pluralité de composants, un premier ensemble des composants possédant des descripteurs de métadonnées exprimés dans un langage de définition structuré afin de définir des caractéristiques du programme applicatif à base de composants et un second ensemble des composants étant exprimé sous la forme d'une série d'instructions de script reliant les descripteurs de métadonnées afin de définir une séquence de travail du programme applicatif à base de composants, les composants étant configurés pour qu'un environnement d'exécution (206) du dispositif de communication mobile (100) effectue une configuration afin de produire une version exécutable du programme applicatif à base de composants, dans le but de configurer le dispositif de communication mobile (100) comme client du service web ;
dans lequel l'exécution de la version exécutable facilite un échange ultérieur de données sur le réseau (102, 104) entre le service web et le dispositif de communication mobile (100).

44. Système de communication (10) comprenant au moins un dispositif de communication mobile (100) selon l'une quelconque des revendications 22 à 41 et/ou au moins un serveur (106, 110) selon la revendication 43.
